# EUROPEAN PATENT APPLICATION

(11) **EP 1 585 008 A1**
(43) Date of publication of application: **12.10.2005**
(21) Application number: 05007749.4
(22) Date of filing: 08.04.2005
(51) Int. Cl.: G06F 1/00

(54) **content reproduction apparatus, program, and content reproduction control method**

(30) Priority: 09.04.2004 JP 2004116276
(71) Applicant: SONY CORPORATION, Tokyo (JP)
(72) Inventor: Tanabe, Mitsuru, Shinagawa-ku Tokyo (JP); Hayashi, Takamichi, Shinagawa-ku Tokyo (JP); Kuno, Hiroshi, Shinagawa-ku Tokyo (JP); Ishii, Tamotsu, Shinagawa-ku Tokyo (JP); Ebihara, Munetake, Shinagawa-ku Tokyo (JP)
(74) Representative: Körber, Martin Hans

(57) **Abstract**

A copyright management system that manages the time limits of the reproduction of a plurality of pieces of content in a batch manner. A content reproduction apparatus (10) has a storage unit (114) storing a reproduction permission ID list and the valid period information of each group ID and a reproduction control block (172) for controlling the reproduction of content data attached with the group ID. The reproduction control block (172) reads the group ID from content data and, if the read group ID is contained in the reproduction permission ID list and the current time is not in excess of the valid period of this group ID, permits the reproduction of the content data; if the read group ID is not contained in the reproduction permission ID list or the current time is in excess of the valid period of this group ID, the reproduction control block restricts the reproduction of the content data.

## Description

### BACKGROUND OF THE INVENTION

The present invention relates to a content reproduction apparatus, a program, and a content reproduction control method.

Unlike conventional analog content, digital content, such as video content and music content for example, allows duplication any number of times without involving the degradation in quality. Therefore, with the recent popularization of the Internet and high-speed and high-storage-capacity personal computers (PCs), the illegal distribution and exchange of content without the permission of copyright holders are on the increase.

For the prevention of these illegal activities, a copyright management system based on the DRM (Digital Rights Management) technology for restricting the distribution and use of content has been widely spreading. With thus copyright management system, it is a general practice to restrict illegal copies by strictly managing the copy count of original content as proposed by SDMI (Secure Digital Music Initiative), for example.

In order to realize the content restricted in reproduction period, the related-art copyright management system uses a method of recording a license including the restriction in reproduction and so on to each piece of content. For example, Patent Document 1 (Japanese Patent Laid-open No. 2003-308440) below describes a system for managing content reproduction period by setting a license including reproduction period and so on to each piece of content.

However, with the above-mentioned related-art copyright management system, a license is set and recorded for each piece of content, so that the efficiency of the management (setting, updating, and other operations) of reproduction period is lowered. Especially, the related-art technology presents a problem of inability of collectively managing the reproduction periods of a plurality of pieces of content grouped by predetermined criteria such as a plurality of pieces of contents owned by a same user, for example.

### SUMMARY OF THE INVENTION

It is therefore an object of the present invention to provide a content reproduction apparatus, a program, and a content reproduction control method for realizing a novel and improved copyright management system that is capable of collectively managing (setting, updating, and so on) the reproduction periods of a plurality of pieces of contents.

According to the first aspect of the present invention, there is provided a content reproduction apparatus including:
a storage unit for storing a reproduction permission ID list with which a group ID is added and deleted and valid period information of the group ID; and
a reproduction control block for controlling reproduction of content data attached with the group ID;
wherein the reproduction control block reads the group ID from the content data and, if the group ID is contained in the reproduction permission ID list and a current time is not in excess of a valid period of the group ID, permits the reproduction of the content data, but, if the group ID is not contained in the reproduction permission ID list or a current time is in excess of a valid period of the group ID, permits the reproduction of the content data, restricts the reproduction of the content data.

According to the second aspect of the present invention, there is provided a content reproduction control method for controlling reproduction of content data in a content reproduction apparatus on the basis of a reproduction permission ID list with which a group ID is added and deleted and valid period information of the group ID contained in the reproduction permission ID list, the program making a computer execute the steps of:
reading a group ID attached to content data requested for reproduction thereof;
determining whether the read group ID is contained in the reproduction permission ID list;
determining, if the read group ID is found contained in the reproduction permission ID list, whether a current time is in excess of a valid period of the read group ID;
permitting reproduction of the content data requested for reproduction thereof if the current time is not in excess of the valid period of the read group ID; and
restricting reproduction of the content data requested for reproduction thereof if the current time is in excess of the valid period of the read group ID.

### BRIEF DESCRIPTION OF THE DRAWINGS

FIG. 1 is a block diagram schematically illustrating an exemplary overall configuration of a copyright management system practiced as a first embodiment of the invention;
FIG. 2 is a block diagram schematically illustrating an exemplary configuration of a distribution server associated with the first embodiment;
FIG. 3 outlines a structure of a user registration database associated with the first embodiment;
FIG. 4 outlines structures of a distribution service forms and a distribution service form database provided by the distribution server associated with the first embodiment;
FIG. 5 outlines an exemplary data structure of group ID associated with the first embodiment;
FIG. 6 outlines an exemplary structure of content data with a recorder ID attached associated with the first embodiment;
FIG. 7 is a block diagram schematically illustrating an exemplary configuration of a content processing apparatus associated with the first embodiment;
FIG. 8 shows an exemplary configuration of a reproduction permission ID list associated with the first embodiment;
FIG. 9 is a block diagram approximately illustrating an exemplary configuration of a content reproduction block associated with the first embodiment;
FIG. 10 is a timing chart indicative of basic flows of the copyright management method associated with the first embodiment;
FIG. 11 is a timing chart indicative of user registration processing in the copyright management system associated with the first embodiment;
FIG. 12 is a flowchart indicative of distributed content reproduction control processing associated with the first embodiment;
FIG. 13 is a timing chart indicative of valid period update processing in the copyright management system associated with the first embodiment;
FIG. 14 is a block diagram schematically illustrating an exemplary configuration of a content processing apparatus practiced as a second embodiment of the invention;
FIG. 15 is a flowchart indicative of created content reproduction control processing associated with the second embodiment; and
FIG. 16 is a schematic diagram illustrating a concept of the created content reproduction control processing associated with the second embodiment.

### DETAILED DESCRIPTION OF THE PREFERRED EMBODIMENTS

The following details embodiments of the present invention with reference to accompanying drawings. It should be noted that components having the substantially the same functions are denoted by the same reference numerals herein and in the accompanying drawings thereby omitting the duplication in description.

First, a copyright management system according to a first and second embodiments of the invention will be outlined.

The copyright management systems according to the embodiments of the invention manage the use (especially, reproduction) of content in a content processing apparatus owned by each user, thereby protecting the copyright of the content. To be more specific, by setting the utilization right and the utilization period of a content, these copyright management systems are intended to grant the use of content relatively freely to authorized users (namely, users who pay the specified fees for the copyrights of content and use the purchased content within the scope of private use) and strictly restrict the reproduction of content for those users who attempt illegal use of content such as mass distribution of content through the Internet and use of content after expiration thereof without making due payment, for example.

In the case of restriction in reproduction period of content, related-art copyright management systems set the license including reproduction time limit for each piece of content as described above. In contrast, the copyright management systems according to the embodiments of the present invention are characterized by the use of "group ID" to set "reproduction right" and "reproduction time limit" in "content group unit" (for example, "user unit of content distribution service", "unit of device in which content is recorded", or the like), thereby enabling or disabling the reproduction of content on the content processing apparatus owned by each user in the above-mentioned "content group unit".

It should be noted that "content group" denotes "a plurality of pieces of content grouped by a predetermined criterion" and "group ID" denotes an identifier for identifying "content group". "Reproduction right" denotes the right that allows the reproduction of content and "reproduction time limit" denotes the expiration time of "reproduction right".

It should also be noted that "content" associated with the embodiments of the invention includes all kinds of content, such as audio content including music, lectures, radio programs, video content including movies, television programs, video programs, photographs, drawings, graphics, electronic books (e-books), games, and software programs. "Content data" denotes digital data for example representative of the above-mentioned various kinds of content; video data, audio data, electronic book data, electronic game data, and software program data, for example. In what follows, content will be described as, but not exclusively, music content distributed from distribution servers or video content ripped by a recording device or self-recorded, for example.

The following details the copyright management systems practiced as the first and second embodiments of the invention.

First, the copyright management system associated with the first embodiment of the invention will be described. This copyright management system mainly manages content (hereafter referred to as "distributed content") that is distributed from a distribution server providing content distribution services to a content processing apparatus. In order to suitably manage the reproduction of the above-mentioned distributed content, the first embodiment uniquely assigns "group ID" in unit of "distribution service form selected by a user registered in a distribution server 20" for example, as will be detailed later. To be more specific, the group ID associated with the first embodiment is assigned as another ID for another distribution server, as another ID for another user, and another ID for another distribution service form selected by a user. The group ID assigned as described above divides the distributed content associated with the present embodiment into groups (namely, content groups) in unit of distribution server, in unit of user, and in unit of distribution service form.

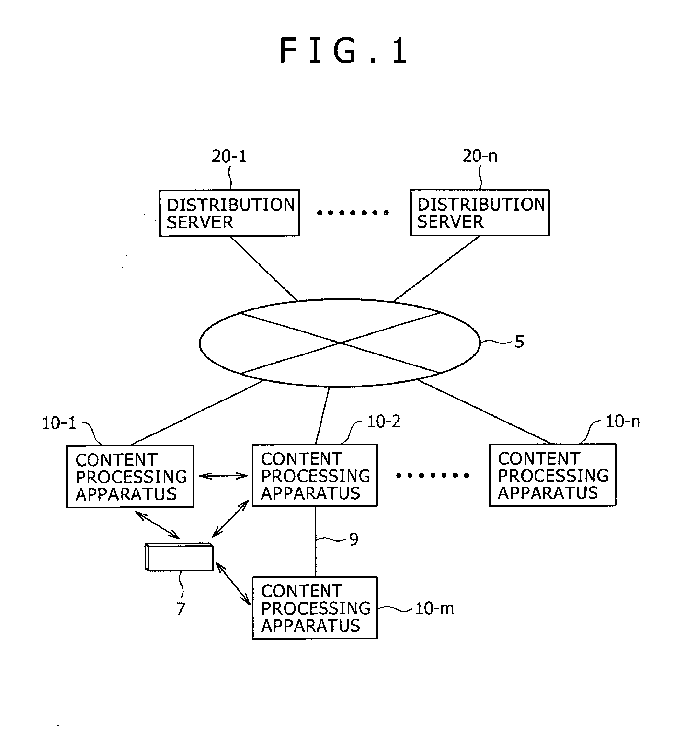

Now, with reference to FIG. 1, an overall configuration of a copyright management system 100 according to the first embodiment of the invention will be described. FIG. 1 is a block diagram approximately illustrating the overall configuration of the copyright management system 100.

As shown in FIG. 1, the copyright management system 100 associated with the present embodiment has a plurality of content processing apparatuses 10-1, 10-2, ..., 10-n (hereafter generically referred to also as "content processing apparatus 10"), a plurality of distribution servers 20-1, 20-2, ..., 20-n (hereafter generically referred to also as a distribution server 20), a network 5 and a local line 9 interconnecting these apparatuses and servers, and a recording medium 7 that is transferred between the content processing apparatuses 10.

The content processing apparatus 10 is configured as a content reproduction apparatus and/or a content recording apparatus associated with the first embodiment. The content reproduction apparatus 10 is a recording/reproducing apparatus, a recording-only apparatus, or a reproduction-only apparatus that is cable of recording and/or reproducing content data with the recording medium 7 or an incorporated storage unit. To be more specific, the content processing apparatus 10 may be constituted by a computer such as a personal computer (PC) regardless of mobile or desktop, a PDA (Personal Digital Assistant), a portable video player/recorder, a portable audio player/recorder such as an MP3 player or IC player/recorder, a picture-taking apparatus such as a digital camera or a video recorder, a home game machine, a VTR, CD, MD or DVD recorder/player, a radio, a mobile phone, a PHS, or home information appliances, for example.

The content processing apparatus 10 is classified into a recording/reproducing apparatus (for example, a computer like a PC) that is capable of installing the software for the above-mentioned content distribution services, a recording/reproducing apparatus (for example, a recording device like DVD player/recorder) that is incapable of installing the above-mentioned software, and a reproduction-only apparatus (for example, a reproduction-only portable device (PD)).

The content processing apparatus 10 such as the PC is able to record the distributed content data supplied from the distribution server 20 to its recording means such as the storage unit or the recording medium 7.

The above-mentioned recording/reproducing apparatus and reproduction-only apparatus that are incapable of installing software (the content processing apparatus 10-m in FIG. 1) is capable of locally connecting to the content processing apparatus 10 such as the PC for example by means of the local line 9. Hence, the content processing apparatus 10-m is capable of getting, via the local line 9, the distributed content received by the content processing apparatus 10 via the network 5. It should be noted that the local line 9 may be constituted by a wired cable such as USB (Universal Serial Bus) cable or SCSI (Small Computer System Interface) cable or constituted in a wireless manner.

The content processing apparatus 10 is capable of transmitting and receiving the above-mentioned distributed content data and created content data with other content processing apparatuses 10 via the network 5 or the local line 9 or via the recording medium 7. Consequently, a plurality of content processing apparatuses 10 are capable of providing and getting content data, thereby sharing the content data.

Also, the content processing apparatus 10 is capable of reproducing the content data created by itself or the distributed content data. In addition, the content processing apparatus 10 is capable of reproducing content data created and supplied by another content processing apparatus 10 or distributed content if it is permitted for reproduction.

The distribution server 20 is constituted as a server for use in content distribution services such as EMD (Electronic Music Distribution) service, for example. The distribution server 20 is constituted by a computer having server capabilities.

The distribution server 20 is capable of distributing content data to the content processing apparatus 10 owned by the user of content distribution services via the network 5. If music content is distributed, the distribution server 20 is capable of compressing the content subject to distribution by use of the MP3 (MPEG Audio Layer 3) standard, for example.

The network 5 is a communication network for interconnecting a plurality of content processing apparatuses 10 and distribution servers 20 in a bidirectional manner. The network 5 is constituted by a public line network such as the Internet, telephone line, or satellite communication network or a dedicated line such as WAN, LAN, or IP-VPN, wired or wireless.

In addition, the network 5 may include a private network. The private network herein denotes a network on which a plurality of content processing apparatuses 10 are interconnected that share content data within a scope of private use as viewed from the standpoint of copyright management. Specific examples of this private network include a network interconnecting a plurality of content processing apparatuses 10 used by the same user, a home network interconnecting a plurality of content processing apparatuses 10 used in the same home, or a LAN interconnecting a plurality of content processing apparatuses 10 used within a small, limited group (for example, a company or friends), for example.

The recording medium 7 is a removable medium capable of storing various kinds of data such as content data and is constituted by an optical disk 3 such as DVD-R, DVD-RW, DVD-RAM, CD-R, CD-RW, or magneto-optical disk, a magnetic disk such as flexible disk or hard disk, or a semiconductor memory. It should be noted that the recording medium 7 may be a recording medium having a copyright management capability of restricting the duplication and reproduction of content data by use of cryptographic key.

The recording medium 7 functions as a medium for providing and/or acquiring content data between the content processing apparatuses 10. For example, the recording medium 7 recorded with content data by the content processing apparatus 10-1 may be loaded on the content processing apparatus 10-2 to read the content data, thereby providing the content data from the content processing apparatus 10-1 to the content processing apparatus 10-2. In addition, by means of the recording medium 7, the content processing apparatuses 10 are capable of providing and/or acquiring content data with the content processing apparatus 10-m that is incapable of connecting to the network 5.

The copyright management system 100 configured as described above allows a plurality of content processing apparatuses 10 to share the same content by providing and acquiring (namely, copying) content data therebetween. In addition, by making the group ID function as the right of reproduction, the reproduction of content data in the content processing apparatus 10 can be permitted or prohibited on a group ID basis (namely, on a content group basis). Further, the setting of a valid period to the above-mentioned right of reproduction allows the management (namely, setting, updating, and the like) of the reproduction time limits of a plurality of pieces of content data on a group ID basis. The following describes, in detail, the content processing apparatus 10 and the distribution server 20 making up the copyright management system 100 described above.

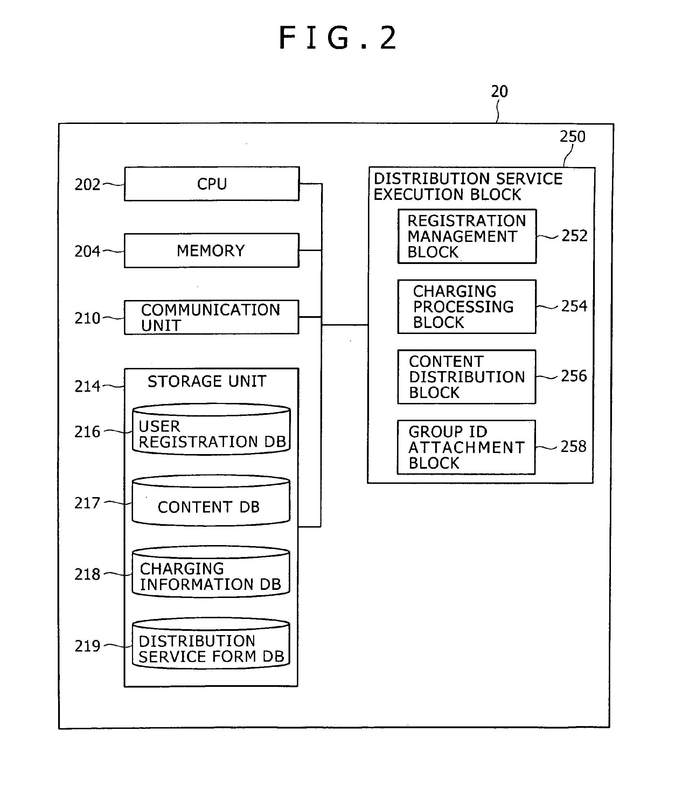

The following describes the distribution server 20 associated with the first embodiment of the invention with reference to FIG. 2. FIG. 2 is a block diagram schematically illustrating an exemplary configuration of the distribution server 20 associated with the present embodiment.

As shown in FIG. 2, the distribution server 20 has a CPU 202, a memory 204, a communication unit 210, a storage unit 214, and a distribution service execution block 250.

The CPU 202 functions as a computation processing unit and a control unit, thereby controlling the components of the content processing apparatus 10. The memory 204, constituted by a RAM, ROM, and a cache memory, temporarily stores various kinds of data necessary for the processing by the CPU 202 and operation programs to be executed thereby.

The communication unit 210 is a communication interface constituted by a communication line, a communication circuit, and a communication device, for example. The communication unit 210 is capable of transmitting and receiving distributed content data, group IDs, valid period information, and various control signals to and from external devices such as the content processing apparatus 10.

The storage unit 214 is a data storage device constituted by a hard disk drive for example for storing various kinds of data including programs. Also, the storage unit 214 stores a user registration database 216, a content database 217, and a charging information database 218, for example.

The user registration database 216 stores user registration information associated with content distribution service, service registration information, device registration information, group IDs, and group ID valid period information, for example. Also the content database 217 stores a plurality of pieces of content data to be distributed by the content distribution service. The charging information database 218 stores charging information of each user. A distribution service form database 219 stores distribution service form information for specifying various kinds of distribution forms to be described later.

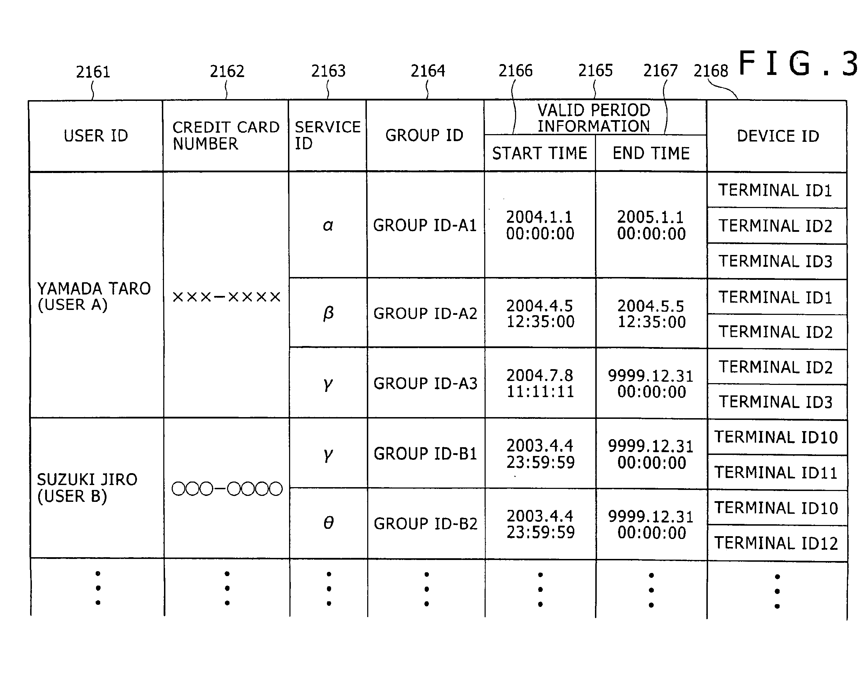

The following describes details of the user registration database 216 with reference to FIG. 3. As shown in FIG. 3, a data table of the user registration database 216 has item 2161 "user ID", item 2162 "credit card number", item 2163 "service ID", item 2164 "group ID", item 2165 "valid period information" (item 2166 "start time" and item 2167 "end time"), and item 2168 "device ID".

User IDs are written to item 2161 "user ID". The user ID is an identification code that each user to be registered in the content distribution service can select as desired.

To item 2162 "credit card number", the credit card number of each registered user is written. This credit card number functions as a password for user authentication and a billing destination in charging service fees.

The user ID and credit card number constitute the user charging information of each user registered in the content distribution service. In addition to the user ID and credit card number, the name, postal address, age, telephone number, gender, occupation, charging method, password, music preference, and other user information may be included in the user charging information.

To item 2163 "service ID", the service ID of a distribution service form selected by each registered user is written. This service ID is uniquely attached on a distribution service form basis. The distribution server 20 associated with the present embodiment allows the same user to select a plurality of distribution service forms to concurrently use the distribution services based on the selected distribution service forms. Hence, in an example of FIG. 3, service IDs α, β, γ of three distribution service forms are related with the same user A (user ID "YAMADA TARO"). One example of this distribution service form is "you can listen to music content of any desired genres on a monthly fixed pay basis without limitation", which will be detailed later.

To item 2164 "group ID", the group ID corresponding to the distribution service form selected by each registered user is written. This group ID is uniquely assigned in unit of "distribution service form selected by each user registered in the distribution server 20" as described above. Hence, another group ID is assigned for another user and another group ID is assigned for another distribution service form selected by the user. To be more specific, as shown in FIG. 3, three different group IDs "group ID-A1", "group ID-A2", and "group ID-A3" are assigned to user A registered in three different distribution service forms. Two different group IDs "group ID-B1" and "group ID-B2" are assigned to user B registered in two different distribution service forms. Because user A and user B are different, "group ID-A1" assigned to user A and "group ID-B1" assigned to user B are not the same if user A and user B are registered in the same distribution service form (service ID α).

To item 2165 "valid period information", the valid period information corresponding to each group ID is written. This valid period information consists of start time information to which item 2166 "start time" is written and end time information to which item 2167 "end time" is written. The start time information is indicative of the time at which the valid period of group ID starts. When the current time passes this start time, the group ID becomes valid. On the other hand, the end time information is indicative of the time at which the valid period of group ID expires. When the current time passes this end time, the group ID becomes invalid. This valid period information is set to each group ID. For example, the valid period information corresponding to "group ID-A1" of user A has start time information "2004.1.1 00:00:00" and end time information "2005.1.1 00:00:00", indicating that "group ID-A1" is valid for 1 year. The valid period information corresponding to "group ID-A3, B1, B2" has end time information "9999.12.31. 00:00:00" for example, which is indicative that the valid period for "group ID-A3, B1, B2" is infinite.

As described above, the valid period information of each group ID associated with the present embodiment is configured as the valid period of each group ID. However, the valid period information may include only the time information at which each group ID becomes invalid (corresponding to the above-mentioned end time information). In the present embodiment, the valid period information of each group ID is configured by date and time information that includes year, month, day, hour, minute, and second information. However, the present embodiment is not restricted to this configuration; for example, the valid period information for each group ID may be date information on a year, month, or day basis or date information on a hour or minute basis.

To item 2168 "device ID", device IDs are written. The device ID is uniquely assigned to each of the content processing apparatuses 10 each at least having content recording or reproduction capabilities. Each content processing apparatus 10 is uniquely identified by this device ID. The device ID includes a terminal ID and a media ID, for example. The terminal ID is uniquely assigned to each content processing apparatus 10 constituted by an information processing apparatus such as a PC. The media ID is uniquely assigned to each storage medium of the content processing apparatus 10 constituted by a recording device, a PD, or the like. In the present embodiment, the terminal ID is used as the device ID, for example.

To item 2168 "device ID", the device ID of the content processing apparatus 10 in the registration processing to be described later is written as related with the group ID. Consequently, the content processing apparatus 10 is registered as a device. This device registration must be executed for each distribution service form selected by the registered user, for example.

By use of the content processing apparatus 10 device-registered for each distribution service form, the registered user is able to receive the provision of distribution services of distribution service forms to which the content processing apparatus 10 is related. To be more specific, in the example of FIG. 3, three "terminal IDs 1, 2, and 3" are related with "group ID-A1" representative of "distribution service form α" of "user A". Of a plurality of content processing apparatuses 10 owned by user A, user A is able to use the three content processing apparatuses 10 assigned with these "terminal IDs 1, 2, and 3" to receive the provision of the service of "distribution service form α". However, because "group ID-A2" representative of "distribution service form β" of "user A" are related only with two "terminal IDs 1 and 2", user A is able to receive the provision of the service of "distribution service form β" by use of the two content processing apparatuses 10 assigned with these "terminal IDs 1 and 2"; but user A cannot receive the provision of the service of "distribution service form α" by use of the content processing apparatus 10 assigned with "terminal ID3".

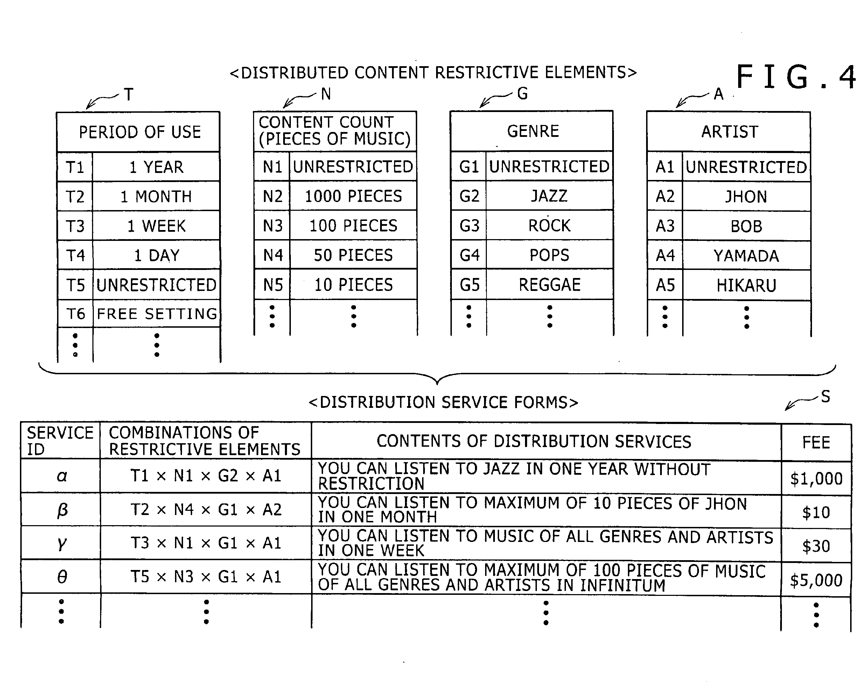

The following describes examples of distribution service forms to be provided by the distribution server associated with the present embodiment and a structure of the above-mentioned distribution service form database 219 with reference to FIG. 4. FIG. 4 shows examples in which the distribution content is music content.

As shown in FIG. 4, the distribution service form database 219 includes a plurality of distributed content restrictive element data table T, N, G, A, and so on and distribution service form information table S. These distributed content restrictive element data tables T, N, G, A, and so on each include distributed content restrictive element information. The distribution service form information data table S includes the information for specifying combinations of distributed content restrictive elements, the text information indicative of distribution service contents, and the information about the use fees of the above-mentioned distribution services.

The following describes the distribution service forms according to the present embodiment with reference to the above-mentioned data tables of the distribution service form database 219. Each distribution service form according to the present embodiment is defined by various distributed content restrictive elements (refer to data tables T, N, G, A, and so on) and the distribution service use fee (refer to data table S).

The distributed content restrictive elements restrict the distributed content that can be distributed in each distribution service form. The distributed content restrictive elements include a restrictive element associated with "period of use" of distributed content (hereafter referred to as restrictive element T), a restrictive element associated with distributable "content count" (hereafter referred to as restrictive element N), a restrictive element associated with "genre" of distributed content (hereafter referred to as restrictive element G), and a restrictive element associated with "artist" (hereafter referred to as restrictive element A), for example.

Restrictive element T associated with "period of use" includes an element to restrict a distributed content reproducible period of time to 1 year (T1), 1 month (T2), 1 week (T3), or 1 day (T4), an element to set the reproducible period of time to "unrestricted" (T5), and an element to allow the user to set a desired reproducible period of time (T6), for example. Restrictive element N associated with "content count" includes an element to set the reproducible number of pieces of content (or music) to "unrestricted" (N1) and an element to restrict the reproducible number of pieces of content (or music) to 1000 (N2), 100 (N3), 50 (N4), or 10 (N5), for example. Restrictive element G associated with "genre" includes an element to set the genre of distributable music content to "unrestricted" and an element to restrict the genre to jazz (G2), rock (G3), pops (G4), or reggae (G5), for example. Restrictive element A associated with "artist" includes an element to set the artist of distributable music content to "unrestricted" (A1) and an element to restrict the artist to Jhon (A2), Bob (A3), Yamada (A4), or Hikaru (A5), for example.

Further, combinations of these distributed content restrictive elements T, N, G, A, and so on determine the contents of distribution services (refer to data table S). For example, a combination of the above-mentioned distributed content restrictive elements T1, N1, G2, and A1 determines "you can listen to jazz for 1 year without restriction (namely, within a use period of 1 year, a plurality of pieces of music content included in the genre of jazz can be received from the distribution server 20 and reproduced on the device-registered content processing apparatus 10 without restriction in content count and artist)".

In addition, setting the distribution service use fee of a price in accordance with the contents of the distribution service concerned to the plurality of contents of distributed content service determined as above determines a plurality of distribution service forms (service ID α, β, γ, θ, and so on). For example, distribution service use fee "S1, 000" is set to distribution service contents "you can listen to jazz for 1 year without restriction" and distribution service form α is determined.

The following describes an exemplary configuration of the distribution service execution block 250 that provides the above-mentioned services of various distribution service forms to be determined as described above, on a user basis and on a registered device basis.

The distribution service execution block 250 is a component for executing content distribution service processing for distributing content data to the user of the content processing apparatus 10 on a pay basis, for example. The distribution service execution block 250 is constituted by content distribution service software installed on the distribution server 20, for example.

As shown in FIG. 2, the distribution service execution block 250 has a registration management block 252, a charging processing block 254, a content distribution block 256, and a group ID attachment block 258, for example.

The registration management block 252 executes the processing of registering each user desiring the use of the content distribution service, changing registered contents, and canceling registration. To be more specific, the registration management block 252 executes the processing of user authentication, selecting and setting distribution service forms, generating and assigning group IDs, generating group ID valid period information, registering the content processing apparatus 10, adding and changing distribution service forms, extending and shortening group ID valid period information, and additionally registering the content processing apparatus 10, for example.

The following specifically describes the above-mentioned processing operations. In response to a registration request from the content processing apparatus 10 of the user desiring the registration thereof for example, the registration management block 252 executes user authentication processing on the basis of the above-mentioned user charging information and sets one or more distribution service forms in accordance with the selection made by the user. In addition, the registration management block 252 generates a group ID corresponding to the selected distribution service forms and assigns the generated group ID to the user.

In executing the above-mentioned processing, the registration management block 252 assigns, to the user desiring the registration, one or more group IDs for each distribution service form selected by the user, for example. To be more specific, as shown in FIG. 3, with one content distribution service to be provided by one distribution server 20, only one user ID is provided to each user. In contrast, if the same user selects a plurality of distribution service forms, a plurality of group IDs are assigned to that user in corresponding to the selected distribution service forms.

Besides, the registration management block 252 generates the valid period information of each group ID assigned to the user on the basis of the use period information and so on defined in each distribution service form set as described above. In addition, the registration management block 252 relates the group IDs with the generated group ID valid period information and reports (transmits) the related information to the content processing apparatus 10 that has requested the registration.

In the above-mentioned processing, the user charging information entered by the user and the generated service IDs, group IDs, and valid period information are stored in the user registration database 216 by the registration management block 252. Thus, the user registration and the registration of distribution service forms have been completed.

Further, at the time of requesting the registration or selecting distribution service forms, the registration management block 252 receives the device ID (or the terminal ID) of the content processing apparatus 10 that has requested the registration and relates the received device ID with the assigned group IDs, storing the resultant information into the user registration database 216. Consequently, the device registration of the content processing apparatus 10 concerned has been completed.

The above-mentioned registration processing allows each registered user to get the distributed content within a scope of registered distribution service forms by use of the content processing apparatus 10.

In addition, the registration management block 252 is capable of additionally registering the content processing apparatus 10. To be more specific, if the user who has made user registration and device registration as described above requests an additional device registration by use of another content processing apparatus 10, the registration management block 252 relates the device ID of that content processing apparatus 10 with the group ID of distribution service forms already registered by that user in the user registration database 216 and stores the related information in the user registration database 216. The additional registration of content processing apparatuses 10 allows the user to receive the provision of content distribution services by use of a plurality of content processing apparatuses 10.

In the additional device registration as described above, the registration management block 252 is also capable of setting the upper limit of the number of content processing apparatuses 10 that can be registered as related with the same group ID (the same distribution service form to be used by the same user). To be more specific, the registration management block 252 may also set, in advance, the upper limit (3, for example) of the number of terminal IDs that can be related with the same group ID. In this case, if a request comes from a plurality of content processing apparatuses 10 for registering the number of terminal IDs exceeding the upper limit, the registration management block 252 may reject the additional device registration. Consequently, the number of content processing apparatuses 10 that are capable of receiving distributed content data can be restricted on the content processing apparatus 10 owned by the same user.

Also, if a request comes from the content processing apparatus 10 of the registered user for addition, stop, or change of distribution service forms, the registration management block 252 is capable of additionally setting a new distribution service form or stopping or changing existing distribution service forms. To be more specific, in executing the processing of adding a new distribution service form or the processing of changing existing distribution service forms, the registration management block 252 may generate the new group ID and valid period information in the same manner as the above-mentioned registration processing, write the newly generated group ID and valid period information, and send the group ID and information to the requesting content processing apparatus 10, for example. Also, for example, in changing or stopping existing distribution service forms, the registration management block 252 may delete the group ID and valid period information corresponding to each changed or stopped distribution service form and send a delete command for deleting the group ID and information to the requesting content processing apparatus 10, thereby making the content processing apparatus 10 delete the group ID and information stored therein.

Further, for example, if a request comes from the content processing apparatus 10 of the registered user for extending or shortening the valid period information of group ID or in automatically updating the valid period information of group ID with respect to existing distribution service forms, the registration management block 252 may update only the valid period information (namely, execute an overwrite operation for extending or shortening the end time, for example) without updating and/or deleting the corresponding existing group ID in the user registration database 216 and send the updated valid period information to the requesting content processing apparatus 10.

In addition, if the above-mentioned various requests or a request for the connection for content purchase come from the content processing apparatus 10 of the user for example, the registration management block 252 can authenticate of that user, for example. This user authentication processing is executed on the basis of the user charging information entered by the user and the user charging information stored in the user registration database 216, for example. The authenticated user is permitted to log in on the content distribution block 256, for example.

The charging processing block 254 executes charging processing for billing the user of each content distribution service for the fee thereof in accordance with each distribution service form set as described above. Such charging information generated by this charging processing as amount billed, settlement method, and settlement date is stored in the charging information database 218, for example.

The content distribution block 256 lets the authenticated user browse a list of distributable content data and select desired distributed content data. Further, the content distribution block 256 distributes the selected content data to the content processing apparatus 10 of that user via the network 5.

The group ID attachment block 258 attaches the group ID corresponding to the distribution service form set above and the user to the distributed content data that is distributed from the content distribution block 256 to the content processing apparatus 10, for example. Hence, the user who received the distribution of that distributed content data and the distribution service form of that distributed content data can be identified by the group ID thus attached to the distributed content data. In other words, which user purchased the distributed content data concerned and with which distribution service format the distributed content data was distributed can be identified by the group ID attached to that distributed content data. The following describes an exemplary structure of the group ID and a method of attaching each group ID by the group ID attachment block 258.

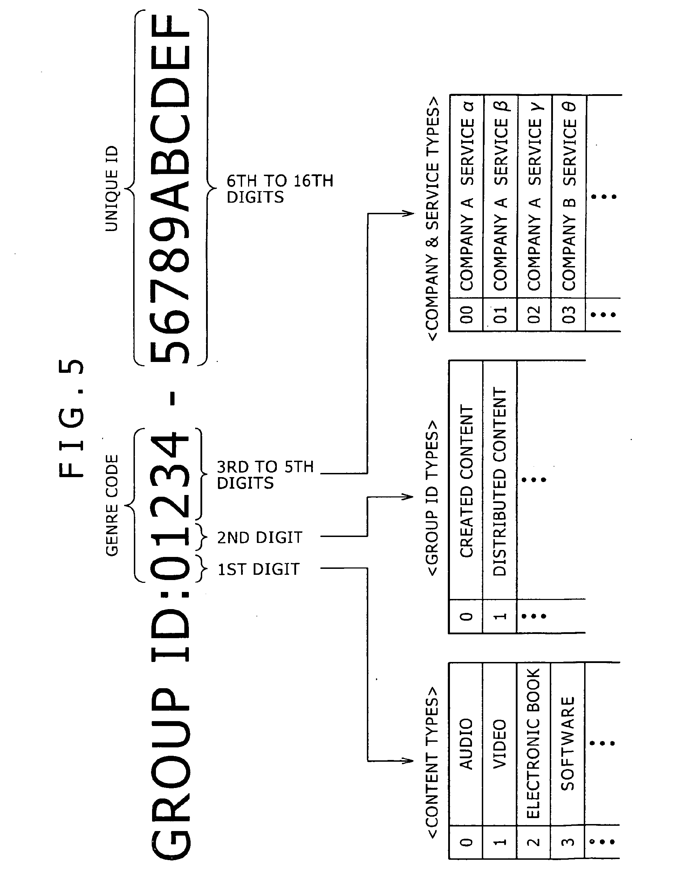

First, a data structure example of the group ID according to the present embodiment will be described with reference to FIG. 5. As shown in FIG. 5, each group ID consists of 16-digit codes (0 through 9, A through F, and so on). Of these 16 digits, the upper 5 digits (digit 1 through digit 5) are indicative of "genre code" representative of a content data attribute and the lower 11 digits (digit 6 through digit 16) are indicative of "unique ID" that is unique for the assignment unit of group ID (for example, unit of distribution service user, unit of distribution service form selected by distribution service user, or unit of content processing apparatus), for example.

"Genre code" is representative of content data attribute information such as "content type code", "group ID type code", and "company and service type code", for example.

To be more specific, digit 1 "content type code" is representative of the type of the content data to which the group ID is attached. This code being "0", "1", "2", and "3" indicate audio content, video content, electronic book content, and software content, respectively.

Digit 2 "group ID type code" is representative of the type of group ID. If this code is "0" it indicates the group IP for created content created by ripping or self recording by the content processing apparatus 10; if this code is "1", it indicates the group ID for distributed content. In the present embodiment, group ID "1" is attached because the object of the present embodiment is distributed content. However, the group ID according to a second embodiment of the invention to be described later is "0" because the object of the second embodiment is created content.

Digits 3 and 4, "company and service type code", is representative of the content distribution service operating company that distributes the distributed content data attached with the group ID concerned and the type of the distribution service form of this company. For example, if this code is "00", it indicates that content data was distributed by "α service operated by company A".

Including the genre code described above into the group ID allows the efficient and sure identification and classification of content data types and content data provision sources on the basis of the group ID.

Digits 5 through 10, "unique ID", is representative of the ID that is unique in the same genre code and assigned for each user and each content processing apparatus, for example. This unique ID allows the specific identification of the owner of content data and the device that created content.

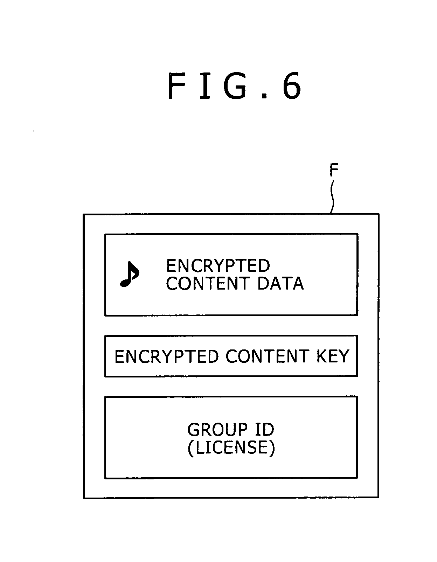

The following describes a method of attaching the group ID by the group ID attachment block 258 on the basis of FIG. 6. As shown in FIG. 6, the group ID attachment block 258 is capable of creating content file F of the distributed content data attached with the group ID by use of an encryption technology, for example.

Content file F includes content data encrypted by a content encryption key, a content encryption key encrypted by a system common key that can be handled only by the copyright management system 100, and a license including the group ID, for example. This license is encrypted such that falsification thereof can be detected. By creating this content file F, the group ID attachment block 258 is capable of securely embedding the group ID into content data. The content processing apparatus 10 holds common secret information so as to decrypt the encrypted content key and check the license for falsification. Therefore, if the content data attached with the group ID is shared within the copyright management system 100, the falsification of the group ID attached to content data can be prevented in a preferred manner.

In another method of attaching the group ID, the group ID attachment block 258 is capable of attaching the group ID to content data by use of a digital watermark technology. In this technology, video data or audio data that are content data itself is distorted such that the group ID can be extracted from the distorted content data only by an electronic watermark detector. Consequently, if content data is transferred as analog data between a plurality of content processing apparatuses 10, the group ID can be maintained in content data. This allows the copyright management in a stricter manner.

It should be noted that the group ID attachment block 258 may be arranged in the content processing apparatus 10 that receives distributed content data. In this case, the content processing apparatus 10 may attach the group ID corresponding to a distribution service form for example to distributed content data when distributed content is received from the distribution server 20.

Thus, the configuration of the distribution server 20 has been described in detail. The distribution server 20 described above distributes the distributed content data attached with the group ID unique to the distribution service form selected by the content distribution service user to the content processing apparatus 10, for example. Also, the distribution server 20 notifies the content processing apparatus 10 device-registered as described above among the content processing apparatuses 10 owned by the registered user of the group ID assigned in unit of distribution service form of this registered user and the valid period information of the group ID concerned. Consequently, when the distributed content data attached with a given group ID is reproduced on the content processing apparatus 10, the above-mentioned group ID sent to that content processing apparatus 10 functions as the right of reproduction and the valid period information sent to that content processing apparatus 10 functions as the reproduction time limit of the distributed content data.

It should be noted that the group ID is assigned in the unit of the distribution service form selected by the user registered with the distribution server 20; it is also practicable to assign the group ID in the unit of the user registered with the distribution server 20 (namely, in the unit of content distribution service user), for example. In this case, the group ID is another ID for another distribution server 20 and another ID for another user; however, if the user is the same, the group ID remains the same for another distribution service form selected by the user. Consequently, the distributed content data reproduction limit time can be managed on a content distribution service user basis.

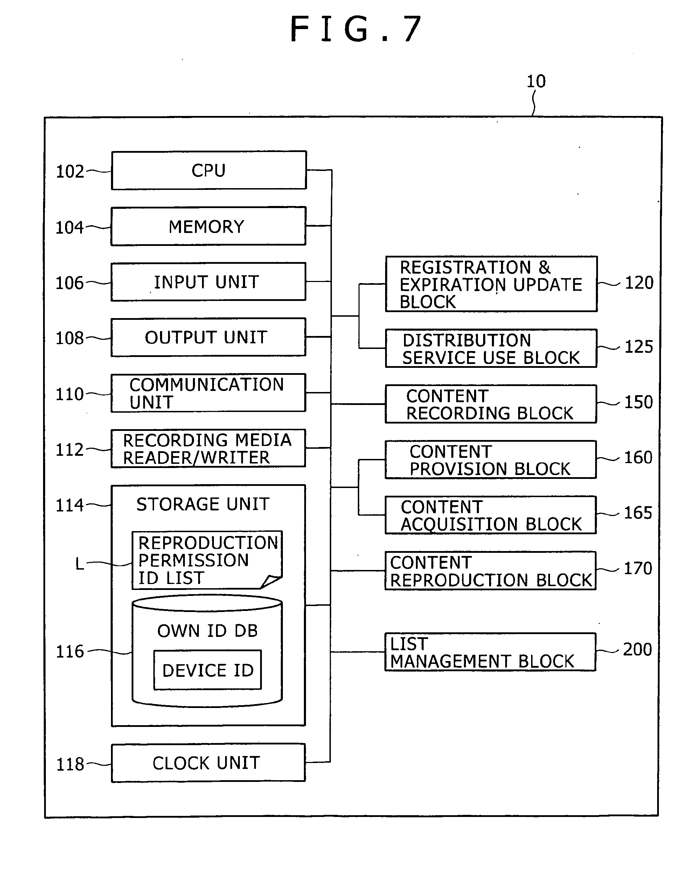

The following describes in detail an exemplary configuration of the content processing apparatus 10 associated with the present embodiment with reference to FIG. 7. FIG. 7 is a block diagram schematically illustrating the configuration of the content processing apparatus 10 associated with the present embodiment. It should be noted that FIG. 7 illustrates the configuration of the content processing apparatus 10 constituted by the above-mentioned PC and so on.

As shown in FIG. 7, the content processing apparatus 10 has a CPU 102, a memory 104, an input unit 106, an output unit 108, a communication unit 110, a recording media reader/writer 112, a storage unit 114, a clock unit 118, a registration and expiration update block 120, a distribution service use block 125, a content recording block 150, a content provision block 160, a content acquisition block 165, a content reproduction block 170, and a list management block 200.

The CPU 102 functions as a computation processing unit and a control unit, thereby controlling the components of the content processing apparatus 10. The memory 104, constituted by a RAM, ROM, and a cache memory, temporarily stores various kinds of data necessary for the processing by the CPU 102 and operation programs to be executed thereby.

The input unit 106 is constituted by operator means such as a mouse, a keyboard, a touch-sensitive panel, a button, a switch, and a lever and an input control circuit that generates input signals and sends the generated input signals to the CPU 102. Operating the input unit 106 allows the entry of various data into the content processing apparatus 10 and the instruction thereof to execute various processing operations.

The output unit 108 is configured by display devices such as a CRT display or an LCD display and lamps for example and an audio output device such as a loudspeaker, for example. The output unit 108 is capable of outputting the content data reproduced by the content reproduction block 170 to be described later. To be more specific, the display devices show the GUI screens for reproduced video data, electronic books, games, and various software programs. On the other hand, the audio output device is capable of sounding reproduced audio data. If the content processing apparatus 10 handles only audio data, the display devices are not required and, if the content processing apparatus 10 handles only video data, the audio output device is not required.

The communication unit 110 provides a communication interface configured by a communication line, a communication circuit, and a communication device, for example. The communication unit 110 is capable of transmitting and receiving content data, reproduction permission list L, control signals, and other various data with another content processing apparatus 10, the distribution server 20, and other external devices.

The recording media reader/writer 112 records and reads various data such as content data and a reproduction permission ID list to and from the recording medium 7. The recording media reader/writer 112 is constituted by a disk unit such as an optical disk drive if the recording medium 7 is an optical disk for example or a semiconductor memory reader/writer if the recording medium 7 is a semiconductor memory. It should be noted that the recording media reader/writer 112 may be incorporated in the content processing apparatus 10 or externally attached.

The storage unit 114 is a data storage unit constituted by a hard disk drive or a flash memory for example, storing various data such as programs and content data.

The storage unit 114 is configured as storage means associated with the present embodiment. Namely, the storage unit 114 stores reproduction permission ID list L with which group IDs are added or deleted. This reproduction permission ID list L is a list of group IDs (or a group ID list). The content data to which a group ID contained in this list is attached can be reproduced by the content reproduction block 170 of the content processing apparatus 10. In this respect, reproduction permission ID list L functions as a list of reproduction rights. Reproduction permission list L is stored as encrypted or signatured so as to prevent the user from falsifying the list, for example.

Reproduction permission ID list L contains one or more group IDs sent from the distribution server 20 to the content processing apparatus 10 and the valid period information of the group ID concerned. Namely, the valid period information of the group ID sent from the distribution server 20 to the content processing apparatus 10 is written to reproduction permission ID list L as related with the group ID concerned.

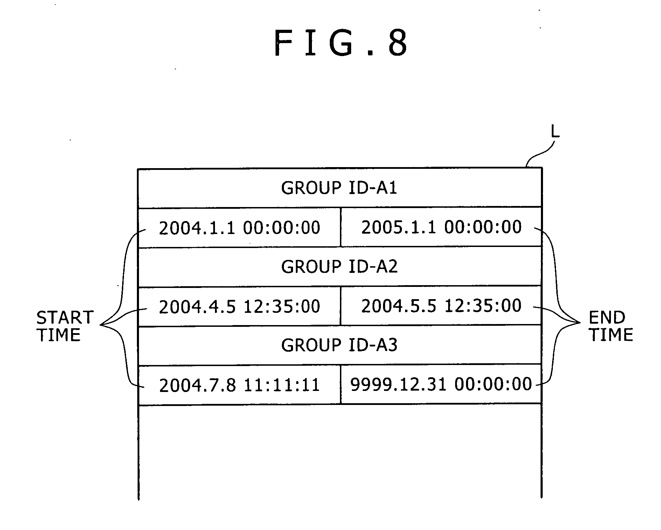

To be more specific, as shown FIG. 8, with reproduction permission ID list L, three group IDs ID-A1, ID-A2, and ID-A3 for example received from the distribution server 20 are written as related with the valid period information (start time information "2004.1.1 00:00:00" for example and end time information "2005.1.1 00:00:00:", for example) on a one to one basis. This reproduction permission ID list L corresponds to item 2164 "group ID" and item 2167 "valid period information" associated with user A in the example of the user registration database 216 shown in FIG. 3. As described above, when user registration processing and distribution service form setting processing have been completed, the group ID corresponding to each distribution service form and the valid period information thereof are sent from the distribution server 20 to the content processing apparatus 10. The registration and expiration update block 120 to be described later receives the group ID concerned and the valid period information thereof and adds the received ID and information to reproduction permission ID list L.

It should be noted that, if the group ID and the valid period information thereof have not been acquired from the distribution server 20 or another content processing apparatus 10 (in the case where no user registration has been made, for example), no group ID may be contained in reproduction permission ID list L. In this case, the content processing apparatus 10-1 is incapable of reproducing any of the distributed content data attached with a given group ID.

Also, it should be noted that the valid period information of group ID may not always be contained in reproduction permission ID list L; the valid period information may be stored in another storage area of the storage unit 114, an own ID database 116 for example, or in the memory 104 or the recording medium 7, for example. Further, the reproduction permission ID list L may not always be stored in the storage unit 114 but may be stored in the memory 104 or in the recording medium 7, for example.

Further, the storage unit 114 stores the own ID database 116 containing the device ID corresponding to the content processing apparatus 10. The device ID (a terminal ID, for example) is an identifier that is assigned uniquely to each content processing apparatus 10 as described above, thereby uniquely identifying each content processing apparatus 10. This device ID and the recorder ID are securely stored in the own ID database 116 in an encrypted form before shipment from factory. Hence, the user owning the content processing apparatus 10 cannot falsify the device ID thereof.

A timer unit 118 is configured as timer means associated with the present embodiment and generates and outputs accurate current timing information. The timer unit 118 is configured by a reliable clock having anti-falsification means. Therefore, unauthorized users are prevented from falsifying the current time information generated by the timer unit 118 to invalidate the reproduction limit time of distributed content data.

The registration and expiration update block 120 executes, for the distribution server 20, user registration request processing, additional registration request processing of the content processing apparatus 10, and distribution service form addition, stop, and change request processing, for example. Therefore, the registration and expiration update block 120 transmits the user charging information (user ID, credit card number, and so on) entered by the user, the service select information indicative of user-desired distribution service form, and the device ID read from the own ID database 116, for example, to the distribution server 20. Also, the registration and expiration update block 120 receives the information indicative of user authentication completion, a group ID, the valid period information thereof, the information indicative of registration completion, and an instruction for deleting the group ID and the valid period information thereof, for example, from the distribution server 20. The registration and expiration update block 120 additionally writes the group ID and the valid period information thereof received from the distribution server 20 to reproduction permission ID list L at the time of new service registration, for example.

Also, the registration and expiration update block 120 is capable of executing user registration cancel request processing on the distribution server 20. In this case too, the registration and expiration update block 120 transmits the information indicative of group registration cancel request (group registration cancel request information, user ID, credit card number, and device ID, for example) to the distribution server 20 as with the time of registration. If the cancellation of registration has been completed, the registration and expiration update block 120 deletes the corresponding group ID and the valid period information thereof from the reproduction permission ID list L.

In addition, the registration and expiration update block 120 is also configured as an expiration update block associated with the present embodiment. This registration and expiration update block 120 requests the updating (extension or reduction) of the valid period information of the group ID contained in reproduction permission ID list L for example and updates the valid period information of the group ID on the basis of the valid period update information supplied from the distribution server 20. This update request processing is achieved by transmitting update request information (user ID, credit card number, device ID, and update request notification) to the distribution server 20. The update processing is executed by transmitting, after the above-mentioned request, the desired update expiration information indicative of the update period desired by the user and service select information indicative of a distribution service form newly desired by the user, for example.

For example, when an update request command and part of the update request information have been entered by the user who desires the extension of distribution service use period (namely, the extension of the valid period information of the group ID), the registration and expiration update block 120 adds the device ID to that update request information and transmits the information to the distribution server 20.

Further, in response to the information indicative of the period expiration of the group ID entered from the content reproduction block 170 to be described later, the registration and expiration update block 120 may request to the distribution server 20 to extend the valid period information of the group ID already expired. In this case, the registration and expiration update block 120 may make this request after confirming whether or not the user desires the extension. For making this confirmation, the registration and expiration update block 120 may notify the user of the content processing apparatus 10 of an expired group ID (by displaying this information on the output unit 108, for example), thereby prompting the user to enter the user ID, the credit card number, the information indicative of desired update period, and the service select information among the above-mentioned update request information, for example. If the user enters the above-mentioned various pieces of information of the above-mentioned update request information in response to the expiration notice, the registration and expiration update block 120 transmits the update request information to the distribution server 20.

In addition, in response to the above-mentioned new request, the registration and expiration update block 120 receives the group ID and the valid period information thereof from the distribution server 20. Then, on the basis of the received group ID and valid period information thereof, the registration and expiration update block 120 updates the valid period update information of the expired group ID in the reproduction permission ID list L.

Also, the registration and expiration update block 120 may synchronize reproduction permission ID list L with reproduction permission ID list L of another content processing apparatus 10. The synchronization herein denotes the merge between a plurality of different reproduction permission ID lists L. The synchronization between reproduction permission ID lists L allows the updating of the valid period information of the group IDs contained in both reproduction permission ID lists L to the longer period of the two (the period that will expire later).

It should be noted that this synchronization between reproduction permission ID lists L may be executed only between the content processing apparatuses 10 having the same group ID. To be more specific, the registration and expiration update block 120 may access reproduction permission ID list L of another content processing apparatus 10 connected to the own content processing apparatus 10 via the network 5 or the local line 9 for example and synchronize reproduction permission ID lists L of both the content processing apparatuses 10 only if there is match totally or partially between the group IDs contained in own reproduction permission ID list L and those contained in reproduction permission ID list L of the own content processing apparatus 10.

The distribution service use block 125 receives the distributed content data from the distribution server 20 via the network 5 and the communication unit 110. Namely, when the user of the content processing apparatus 10 purchases content data by use of the content distribution service, the distribution service use block 125 downloads the distributed content data from the distribution server 20. The distributed content data thus downloaded is attached with the group ID by the distribution server 20. The distribution service use block 125 records the received distributed content data to the storage unit 114 or the recording medium 7, for example.

Also, the distribution service use block 125 is capable of transmitting and receiving the user authentication information (user ID, password, and so on) charging information, and content distribution request information that are necessary for the use of content distribution service with the distribution server 20 and supporting the input/output of these pieces of information.

It should be noted that the above-mentioned registration and expiration update block 120 and the distribution service use block 125 are configured by installing the content distribution service software corresponding to the content distribution service to be used onto the content processing apparatus 10. If the user uses the content distribution service supported by a plurality of distribution servers 20, the registration and expiration update block 120 and the distribution service use block 125 may be arranged for each of these content distribution services.

The content recording block 150 controls the storage unit 114 or the recording media reader/writer 112 for example to record the distributed content data received by the distribution service use block 125 and the content data acquired from the outside by the content acquisition block 165 to the storage unit 114 or the recording medium 7.

The content provision block 160 is capable of providing distributed content data attached with group ID for example to an external content processing apparatus 10. Also, the content acquisition block 165 is capable of receiving distributed content data attached with group ID from an external content processing apparatus 10. The content provision block 160 and the content acquisition block 165 may execute the content data provision and acquisition by the transmission and reception processing via the network 5 or the local line 9 or via the recording medium 7.

In providing or acquiring the content data concerned via the network 5, the content provision block 160 functions as a content transmission control block for controlling the communication unit 110 to transmit the content data concerned via the local line 9, for example. On the other hand, the content acquisition block 165 functions as a content reception control block for controlling the communication unit 110 to receive the content data concerned via the network 5 or the local line 9, for example.

On the other hand, in providing or acquiring content data via the recording medium 7, the content provision block 160 functions as a content write control block for controlling the recording media reader/writer 112 to write the content data concerned to a recording medium, for example. The content acquisition block 165 functions as a content read control block for controlling the recording media reader/writer 112 to read the content data concerned from a recording medium.

The content reproduction block 170 is configured by the content reproduction software installed on a reproduction apparatus having content reproduction capabilities or the content processing apparatus 10 and is capable of to reproducing various kinds of content data. The content data reproduced by this content reproduction block 170 is outputted from the above-mentioned output unit 108.

Further, the content reproduction block 170 has reproduction permission ID list L corresponding to itself in the storage unit 114, for example. When reproducing content data to which the above-mentioned group ID is attached, the content reproduction block 170 controls the reproduction of the content data depending on whether that group ID is included in reproduction permission ID list L.

The list management block 200 updates the above-mentioned reproduction permission ID list L, namely, adds or deletes group IDs to or from this list. By adding or deleting group IDs to reproduction permission ID list L, the list management block 200 is capable of enabling or disabling the reproduction of the content data attached with a group ID in the content processing apparatus 10. Also, the list management block 200 is capable of synchronizing reproduction permission ID list L in its content processing apparatus 10 and that of another content processing apparatus 10.

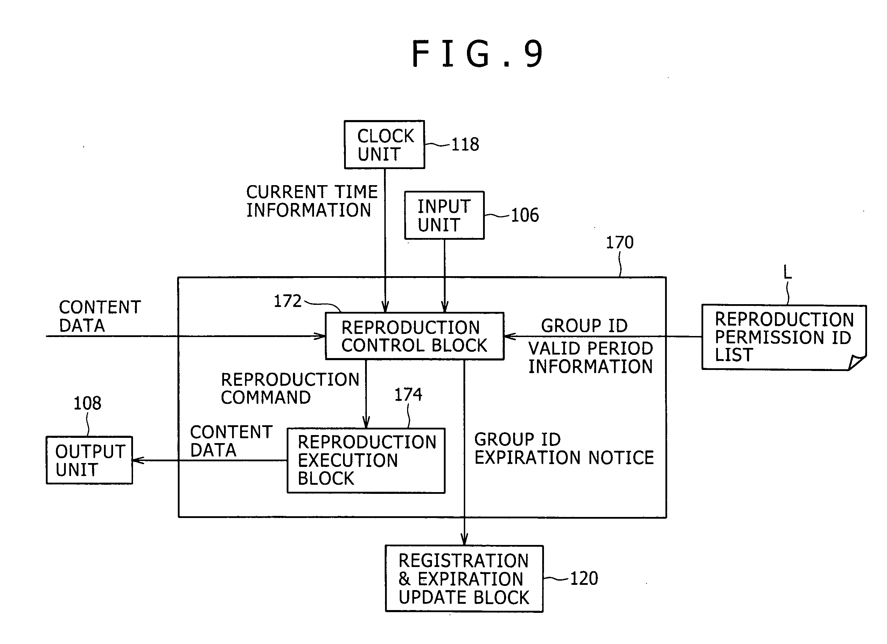

The following describes, in detail the content reproduction block 170 associated with the present embodiment with reference to FIG. 9. FIG. 9 is a block diagram schematically illustrating an exemplary configuration of the content reproduction block 170 associated with the present embodiment.

As shown in FIG. 9, the content reproduction block 170 has a reproduction control block 172 and a reproduction execution block 174, for example.

The reproduction control block 172 controls the reproduction of content data on the basis of the group ID attached to the content data requested for reproduction, the reproduction permission ID list L, the valid period information of the group ID, and the current time information.

In response to a reproduction command signal supplied from the reproduction control block 172, the reproduction execution block 174 reproduces the specified content data. This reproduction execution block is configured by a reproduction apparatus having content reproduction capabilities or content reproduction software, for example.

The following describes the reproduction control processing by the reproduction control block 172 in detail. First, receiving a reproduction request for reproducing user-specified content data (distributed content data, for example), the reproduction control block 172 reads the content data requested for reproduction from the storage unit 114 or the recording medium 7 and determines whether a group ID is attached to the content data. If no group ID is found attached, then the reproduction control block 172 determines that this content data is one that does not require copyright management and permits the reproduction of the content data, outputting a signal specifying the reproduction of the content data to the reproduction execution block 174. On the other hand, if a group ID is found attached to the content data, the reproduction control block 172 determines that this content data requires copyright management, executing the following processing.

First, the reproduction control block 172 reads (or extracts) the group ID from the above-mentioned content data to interpret the group ID by reading reproduction permission ID list L from the storage unit 114, for example. Next, the reproduction control block 172 makes a comparison between the group ID read from the above-mentioned content data and the group ID contained in reproduction permission ID list L to determine whether the group ID read from the content data is contained in reproduction permission ID list L (first decision processing). To be more specific, in the first decision processing, the group IDs contained in reproduction permission ID list L are read one by one by the reproduction control block 172 to be matched with the group ID read from the content data, thereby determining whether any of the group IDs contained in reproduction permission ID list L matches the group ID read from the content data, for example.

If the group ID read from the content data is not found in reproduction permission ID list L as a result of this first decision processing, then the reproduction control block 172 restricts the reproduction of that content data, or rejects the reproduction for example, outputting no reproduction command signal. Hence, the reproduction execution block 174 is prevented from reproducing that content data.

The rejection of the reproduction of distributed content data in this first decision processing denotes that the content processing apparatus 10 does not have the reproduction right of the content data requested for reproduction. To be more specific, this means that (1) "the above-mentioned content data requested for reproduction is distributed content data acquired from the distribution server 20 by the purchase by another user" or (2) "the above-mentioned content data requested for reproduction is the distributed content data acquired from the distribution server 20 by the purchase by the same user, but acquired by a different distribution service form from that of the distribution content data permitted for reproduction by the content processing apparatus 10".

On the other hand, if the group ID read from the above-mentioned content data is found in reproduction permission ID list L as a result of the first decision processing, then the reproduction control block 172 gets the current time information from the timer unit 118, reads, from reproduction permission ID list L, the valid period information corresponding to the group ID read from the above-mentioned content data, and determines whether the current time exceeds the valid period of the group ID read from the above-mentioned content data (this is a second decision).

The exceeding of the current time over the valid period of the group ID read from the above-mentioned content data includes not only the case where the current time is later than the valid period, but also the case where the current time is earlier than the start time of the valid period. Therefore, to be more specific, in the second decision processing, the reproduction control block 172 compares the above-mentioned current time with the start time of the valid period of the group ID read from the above-mentioned content data and the end time thereof, thereby determining whether the current time is earlier than the end time of the valid period and later than the start time of the valid period.

If the current time is found exceeding the valid period of that group ID as a result of the second decision processing, then the reproduction control block 172 disables the reproduction of the above-mentioned content data, not outputting a reproduction command signal. Hence, the reproduction execution block 174 cannot reproduce that content data.

The rejection of the reproduction of distributed content data in the second decision processing denotes that the reproduction period of the content data requested for reproduction has expired on the content processing apparatus 10, for example. To be more specific, this denotes that (1) "the content data requested for reproduction is the distributed content data acquired from the distribution server 20 by the purchase by the same user" and (2) "the distributed content data acquired by the same distribution service form as that of the distributed content data permitted for reproduction on the content processing apparatus 10", but (3) "the valid period of the group ID has expired, or the use time limit of the distribution service form of the user corresponding to that group ID has been reached".

On the other hand, if the current time is found not exceeding the valid period of the group ID read from the above-mentioned content data (namely, if the current time is earlier than the end time of the valid period and later than the start time of the valid period), then the reproduction control block 172 permits the reproduction of that content data, outputting a content data reproduction command signal to the reproduction execution block 174.

Thus, the reproduction control block 172 associated with the present embodiment permits the reproduction of all content data attached with the group ID contained in reproduction permission ID list L and the valid period of that group ID is still valid.

On the other hand, the reproduction control block 172 executes the restriction of reproduction by completing disabling the reproduction of any content data attached with any group ID not contained in reproduction permission ID list L and any content data attached with the group ID contained in reproduction permission ID list L but the valid period of that group ID has expired. It should be noted that the restriction on the reproduction of content data is not limited to the above-mentioned restriction; for example, the reproduction control block 172 also is capable of executing reproduction restrictions such as permitting the reproduction of content data only partially in time or contents, permitting the reproduction of content data with lowered picture and/or audio quality, or permitting the reproduction of content data for only the first predetermined number of times (once, for example), disabling the subsequent reproductions.

Also, if the group ID read from content data is contained in reproduction permission ID list L but the valid period of that group ID is exceeds the current time as described above, the reproduction control block 172 outputs a notification indicative of that group ID and the expiration of the valid period thereof to a list management block 186.

Thus, the content reproduction block 170 associated with the present embodiment has been described in detail. It should be noted that two or more content reproduction blocks 170 may be arranged for one content processing apparatus 10. For example, two or more content reproduction blocks 170 may be arranged by installing the two or more kinds of content reproduction software on one content processing apparatus 10, by arranging two or more reproduction apparatuses, or by using the content reproduction software and the reproduction apparatus at the same time.

In this case, reproduction permission ID list L may be arranged for each of a plurality of content reproduction blocks 170. Consequently, two or more content reproduction blocks 170 are capable of controlling the reproduction of the content data attached with group IDs in accordance with their own reproduction permission ID lists L. Alternatively, one content processing apparatus 10 may have one reproduction permission ID list L, thereby sharing one reproduction permission ID list L by a plurality of content reproduction blocks 170. This configuration allows the integration of the control of the reproduction of content data attached with group IDs within the same content processing apparatus 10 regardless of the content reproduction block 170 that executes reproduction processing.

Thus, each of the components of the content processing apparatus 10 has been described. It should be noted that all of the above-mentioned components may not always be arranged depending on the type of the content processing apparatus 10. For example, a content processing apparatus 10B such as a recording device may not always have the registration and expiration update block 120 and the distribution service use block 125. The content processing apparatus 10 such as a PD may not always have the registration and expiration update block 120, the distribution service use block 125, and the content recording block 150.

The above-mentioned registration and expiration update block 120, distribution service use block 125, content recording block 150, content provision block 160, content acquisition block 165, content reproduction block 170, and list management block 180 may be each configured as the hardware having the above-mentioned capabilities or by the software having the above-mentioned capabilities installed on the content processing apparatus 10.

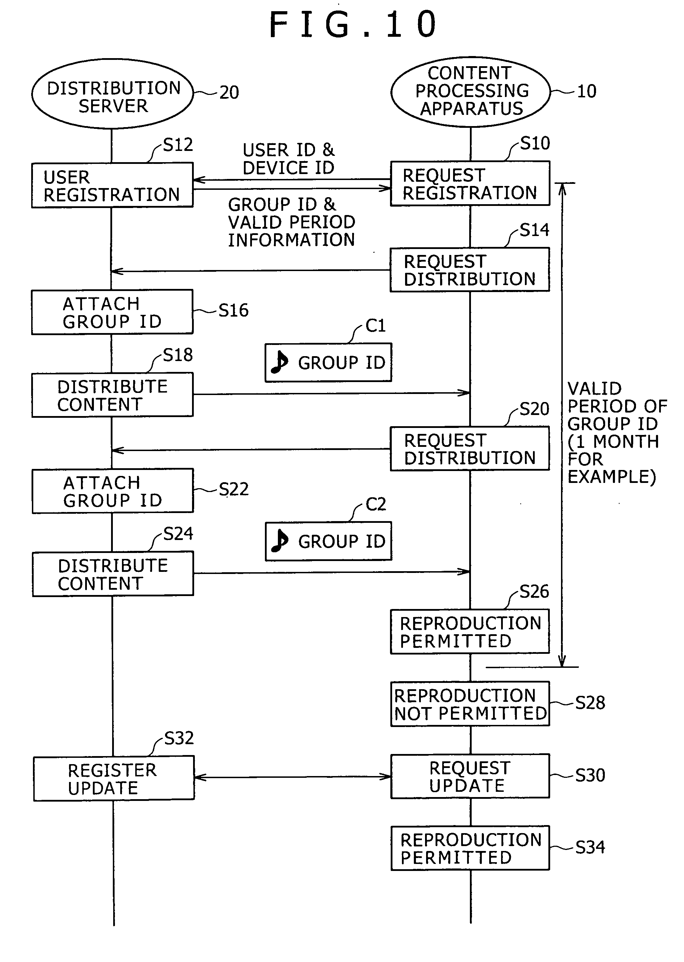

The following describes the basic flow of a copyright management method based on the copyright management system 100 with reference to FIG. 10. FIG. 10 is a timing chart indicative of the basis flow of the copyright management method associated with the present embodiment.

As shown in FIG. 10, a new user selects, through the own content processing apparatus 10, a distribution service form and requests the distribution server 20 for registration (S10). In response, the distribution server 20 authenticates the user and executes user registration with the user-selected distribution service form, transmitting the group ID and the valid period information thereof to the content processing apparatus 10 (S12). Adding the received group ID and the valid period information thereof to reproduction permission ID list L, the content processing apparatus 10 is allowed to reproduce a plurality of pieces of content data distributed with the registered distribution service form within the valid period (1 month, for example) of the group ID identified by the valid period information of that group ID.

Next, if the registered user wants to get desired distributed content data, the registered user requests the distribution server 20 for the distribution (or the purchase) of the desired content data through the own content processing apparatus 10 (S14). In response, the distribution server 20 adds the group ID assigned to that user at the time of user registration (to be more specific, the group ID assigned to the distribution service form selected by the user) to the requested content data (S16), distributing content data C1 attached with that group ID to the content processing apparatus 10 (S18).

Further, if the desired user wants to get another piece of distributed content data that is distributable in the same service form, the registered user gets distributed content data C2 attached with the same group ID as the group ID of above-mentioned distributed content data C1 through the same distribution request (S20), group ID attachment (S22), and content distribution (S24) as the above-mentioned steps 14, 16, and 18. It should be noted that the reproduction time limit of this distributed content data is the same as that of the above-mentioned distributed content data C1. This is because, with the copyright management system 100 associated with the present embodiment, the license (namely, the reproduction time limit) is given to each piece of content data, but the license (namely, the valid period information) is given to the group ID.

Consequently, within the valid period (1 month, for example) of the group ID, both distributed content data C1 distributed earlier and distributed content data C2 distributed later can be reproduced (S26). However, if the end time of the valid period of the group ID has been passed and the valid period of the group ID has expired (for 1 month, for example), both distributed content data C1 and C2 cannot be reproduced even if the valid period (1 month) of the group ID has not been passed from the distribution of C1 and C2 (S28).

Therefore, if the user wants to further reproduce distributed content data C1 and C2 and another piece of content data that is obtainable with the above-mentioned distribution service form, the user requests the updating of the valid period information of the group ID (S30). Then, in response to the request, the distribution server 20 executes user authentication and charging processing and extends the valid period of the group ID on the content processing apparatus 10 or transmits a new group ID and the valid period information thereof to the content processing apparatus 10, thereby updating the registration (S32). Consequently, both distributed content data C1 and C2 become reproducible on the content processing apparatus 10 again (S34).

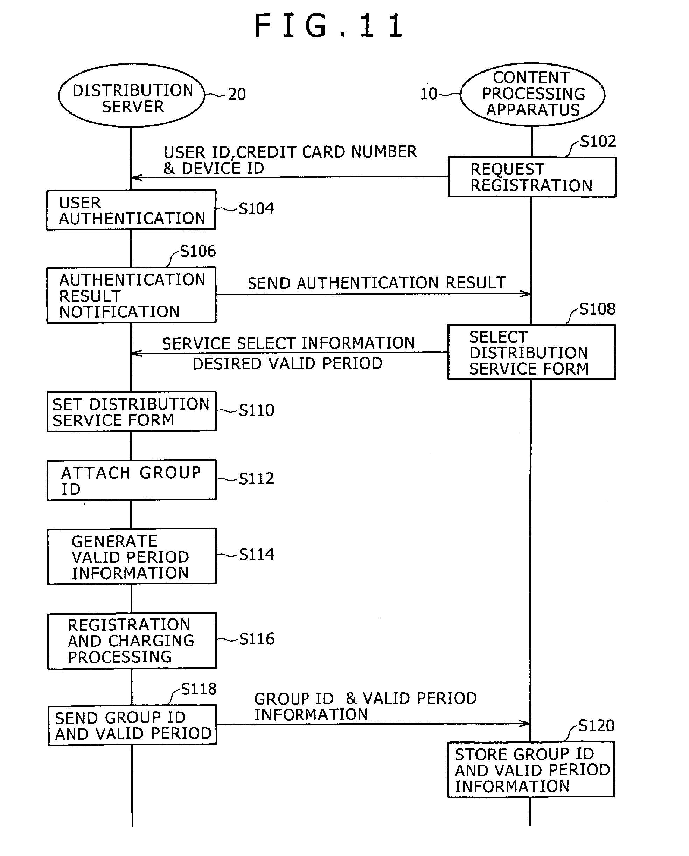

The following describes the processing of user registration with the distribution server 20 in the copyright management system 100 associated with the present embodiment with reference to FIG. 11. FIG. 11 is a timing chart indicative of the user registration processing in the copyright management system 100.

As shown in FIG. 11, in step S102, the registration and expiration update block 120 of the content processing apparatus 10 requests the distribution server 20 for registration (step S102). The registration here includes the registration of new user, the registration of additional distribution service form, and registration of additional device, for example. In carrying out the registration operations, the registration and expiration update block 120 generates user registration request information in accordance with the information entered by the user (for example, group registration request notification, user ID, and credit card number) and reads the device ID (a terminal ID, for example) from the own ID database 116, transmitting these pieces of information to the distribution server 20 via the network 5.

Next, in step S104, a user authentication block 234 of the distribution server 20 authenticates the user of the content processing apparatus 10 requesting the registration (step S104). This user authentication processing is executed by determining whether the user charging information contained in the received group registration request information matches the user charging information of the user registration database 216. If the user authentication fails, the registration processing ends. If the user authentication is successful, the procedure goes to step S106.

In step S106, the registration management block 252 of the distribution server 20 transmits a notification of authentication to the content processing apparatus 10 (step S106). In response, the content processing apparatus 10 becomes capable of executing the service select processing in the distribution server 20, for example.

Then, in step S108, on the basis of the information entered by the user, the content processing apparatus 10 transmits distribution service form select information and/or desired valid period information to the distribution server 20 (step S108). Operating the input unit 106, the user of the content processing apparatus 10 selects a desired distribution service form from among a plurality of distribution service forms, on the GUI screen for example displayed on the content processing apparatus 10. A distribution service form to be selected here is one that is described with reference to FIG. 4, distribution service form α "you can listen to jazz for 1 year without restriction for a fee of $1,000", for example. It should be noted that the user is able to select one or more distribution service forms. When a distribution service form is selected by the user, the content processing apparatus 10 generates the distribution service form select information corresponding to the selected distribution service form and transmits the generated information to the distribution server 20.

Instead of selecting a distribution service form predetermined in its use period, the user may select a distribution service form that allows the user to set a service use period (the valid period of the group ID) as desired as indicated by "T6" shown in FIG. 4. In this case, the user enters a desired valid period of the distribution service form (namely the valid period of the group ID) into the own content processing apparatus 10. In response, the content processing apparatus 10 generates the desired valid period information and transmits the generated information to the distribution server 20 along with the above-mentioned distribution form select information "T6".

In step S110, on the basis of the received distribution service form select information, the registration management block 252 of the distribution server 20 sets the selected distribution service form to the requesting content processing apparatus 10 (step S110).

In step S112, the registration management block 252 of the distribution server 20 generates the group ID corresponding to the user who requested registration and the selected distribution service form and gives the generated group ID to that user (step S112). This group ID identifies the user of the content distribution service and the distribution service form selected by this user. It should be noted that, if a plurality of distribution service forms are selected at a time, a plurality of corresponding group IDs are assigned.

Next, in step S114, on the basis of the use period defined for each distribution service form set as described above or the desired valid period received as above, the registration management block 252 of the distribution server 20 generates the valid period information of each group ID assigned to the user (step S114).

In step S116, the registration management block 252 of the distribution server 20 executes registration processing and charging processing (step S116). The registration management block 252 stores the user charging information entered by the user, the generated service ID, the group ID and the valid period information thereof into the user registration database 216. This completes the user registration of that user, the registration of a distribution service form, and the device registration of the content processing apparatus 10. Further, the distribution server 20 executes charging processing in accordance with the registered distribution service form. The distribution server 20 associated with the present embodiment is capable of setting a service by which the user is able to listen to music at a monthly fixed rate without restriction for example as a distribution service form. Therefore, the charging processing in this step may be executed on a fixed-charge, prepaid basis rather than on a conventional metered rate basis in accordance with the number of pieces of distributed content or amount of data.

In step S118, the registration management block 252 of the distribution server 20 transmits a notification of the group ID assigned in step S114 and the valid period information of the group ID generated in step S116 to the requesting content processing apparatus 10 (step S118). In this process, the registration management block 252 may also generate a registration completion notification and transmits this notification to the content processing apparatus 10 along with the group ID valid period information.

Then, in step S120, the registration and expiration update block 120 of the requesting content processing apparatus 10 securely stores the group ID and the valid period information thereof received from the distribution server 20 into the content processing apparatus 10. For example, the notified group ID and the valid period information thereof are written to reproduction permission ID list L stored in the storage unit 114 as related with each other as shown in FIG. 8.

Thus, the registration processing by the content processing apparatus 10 has been completed. Consequently, the registered user is able to receive and reproduce the distributed content data within the valid period of the group ID by use of the registered content processing apparatus 10. It should be noted that the user, once registered, may repeat the above-mentioned processing operations to register another content processing apparatus 10 of his own in the same distribution service form. Consequently, the user is able to receive the provision of services with the same distribution service forms by use of that another content processing apparatus 10 and the content processing apparatus 10 registered before. Further, as long as the upper limit of the number of device-registered content processing apparatuses 10 is not exceeded, more content processing apparatuses 10 may be registered in the same distribution service form of the same user.

In order for the same user to register another distribution service form, all content processing apparatuses 10 desired for use in the reception of distributed content data may be used to execute the above-mentioned registration processing.

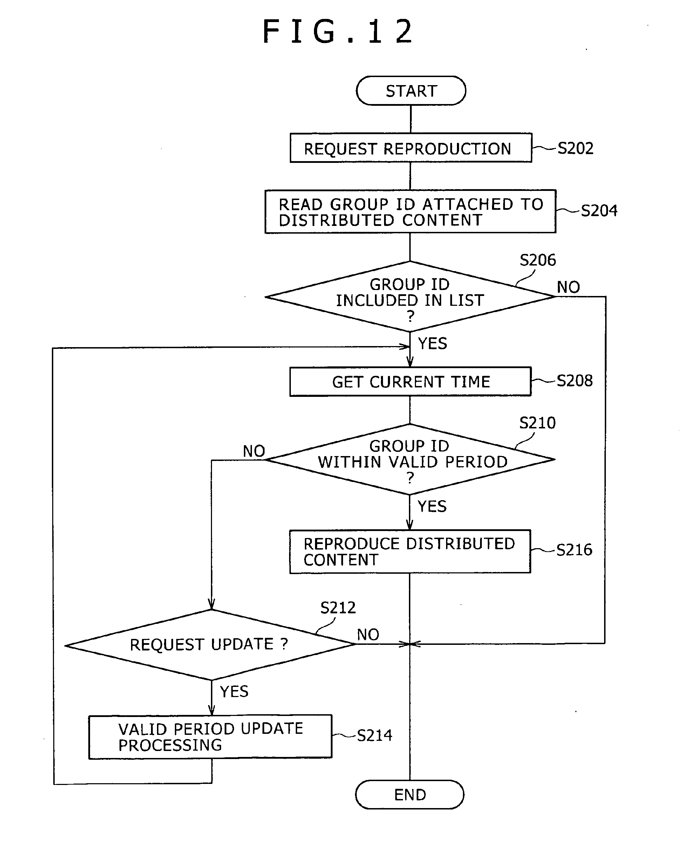

The following describes the distributed content reproduction control processing in the content processing apparatus 10 (or the content reproduction apparatus) of the copyright management system 100 associated with the present embodiment, with reference to FIG. 12. FIG. 12 shows a flowchart indicative of the distributed content reproduction control processing associated with the present embodiment.

Referring to FIG. 12, in step S202, the user requests the reproduction of distributed content data, for example (reproduction request step S202). The user makes this request by selecting desired distributed content data through the input unit 106 of the content processing apparatus 10 and instructs the content reproduction block 170 of the content processing apparatus 10 to reproduce the selected distributed content data.

In step S204, the group ID attached to the distributed content data is read (group ID extraction step S204). The content reproduction block 170 of the content processing apparatus 10 reads the requested distributed content data from the storage unit 114 or the recording medium 7 for example and reads (or extracts) the group ID attached to the distributed content data, thereby interpreting the group ID.

In step S206, it is determined whether the extracted group ID is contained in reproduction permission ID list L of the content processing apparatus 10 (first decision step S206). To be more specific, the reproduction control block 172 of the content reproduction block 170 reads reproduction permission ID list L from the storage unit 114 for example and interprets the list. Next, the reproduction control block 172 compares the group ID read from the above-mentioned content data with the group ID contained in reproduction permission ID list L to determine whether the group ID read from the content data is contained in reproduction permission ID list L (the first decision step).

If the group ID read from the distributed content data is found contained in reproduction permission ID list L, then the reproduction control block 172 permits the reproduction of that distributed content data and the procedure goes to step S208. On the other hand, if the group ID read from the distributed content data is found not contained in reproduction permission ID list L, then the reproduction control block 172 does not permit the reproduction of that distributed content data and ends the reproduction control processing.

Further, in step S208, the current time information is acquired (current time acquisition step S208). The reproduction control block 172 acquires the current time information generated by the timer unit 118.

Next, in step S210, it is determined whether the acquired current time is in excess of the valid period of the group ID read from the above-mentioned content data (a second decision step S210). To be more specific, the reproduction control block 172 reads the valid period information of the group ID read from the above-mentioned distributed content data from reproduction permission ID list L. Because the group ID read from the above-mentioned content data is contained in reproduction permission ID list L (the first decision step), the valid period information of the group ID read from the above-mentioned distributed content data is recorded in reproduction permission ID list L as related with that group ID, for example. Therefore, the reproduction control block 172 reads the valid period information of that group ID from reproduction permission ID list L.

Next, the reproduction control block 172 determines whether the current time acquired as above is in excess of the valid period (hereafter referred to as a "first valid period") of the ID group read from the above-mentioned content data (the second decision step). To be more specific, the reproduction control block 172 compares the current time with the start time of the above-mentioned first valid period to determine whether the current time is before the end time of the first valid period and after the start time of the first valid period.

If, as a result of the second decision processing, the current time is found in excess of the first valid period, then it indicates that the valid period of the group ID has expired. Hence, the reproduction control block 172 does not permit the reproduction of the above-mentioned content data and the procedure goes to step S212.

On the other hand, if, as a result of the second decision processing, the current time is found not in excess of the first valid period (namely, if the current time is before the end time of that valid period and after the start time of that valid period), the reproduction control block 172 permits the reproduction of that content data and the procedure goes to step S216, in which that content data is reproduced (step S216).

In step S212, it is determined whether a request for updating the above-mentioned first valid period is to be made to the distribution server 20 (update request decision step S212). Because the above-mentioned valid period has expired, the distributed content data attached with the group ID cannot be reproduced.

Therefore, the above-mentioned decision is made in this step, whether or not to make a request to the distribution server 20 for the updating of the first valid period information. This decision may be made automatically by the registration and expiration update block 120 of the content processing apparatus 10. In this case, the update request may be made always or not or the update request may be made only if a predetermined condition is satisfied, for example. Alternatively, the registration and expiration update block 120 may notify the user of the content processing apparatus 10 of the disability of the reproduction of that distributed content data because the valid period of the group ID attached thereto has expired, thereby letting the user determine whether or not to make the update request.

If the update request is to be made as a result of the above-mentioned decision, the procedure goes to step S214, in which the valid period update processing to be described later is executed. Then, back in step S208, the above-mentioned processing is repeated. On the other hand, if the update request is not to be made, the processing comes to an end without reproducing the distributed content data.

Thus, the distributed content data reproduction control processing is executed on the basis of the group ID attached to distributed content data, the valid period information of this group ID, and reproduction permission ID list L. According to this reproduction control, the time limit of content data reproduction may be set on a group ID basis to permit or not permit the reproduction of content data. Therefore, the processing of permitting or not permitting the reproduction of distributed content data and the setting and updating of the reproduction time limit may be executed in unit of a plurality of pieces of distributed content data grouped by a predetermined condition (for example, in unit of the distributed content data owned by the same user or the distributed content data distributed to the same user in the same distribution service form).

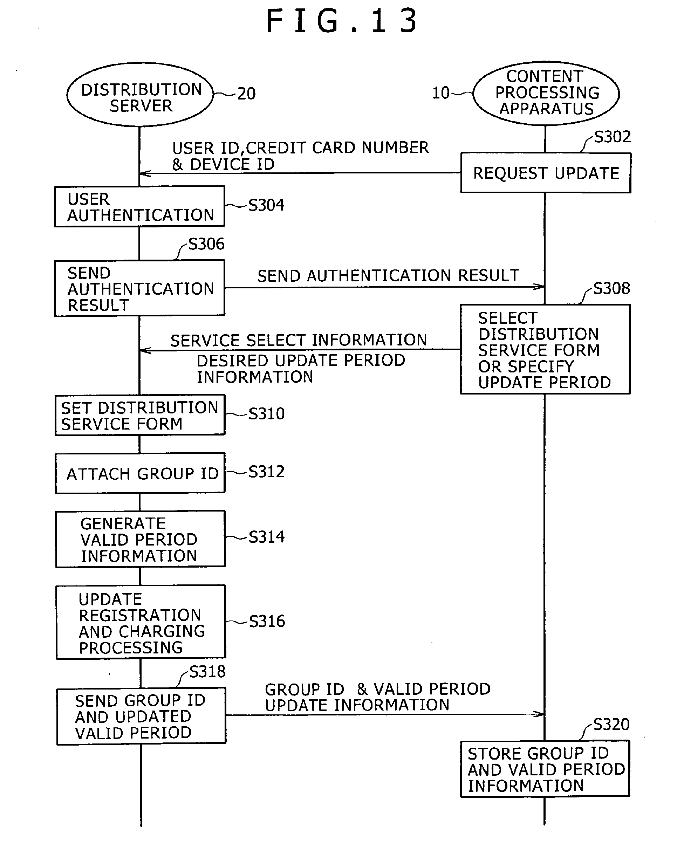

The following describes the valid period update processing in the copyright management system 100 associated with the present embodiment with reference to FIG. 13. FIG. 13 is a timing chart indicative of the valid period update processing in the copyright management system 100.

As shown in FIG. 13, in step S302, the registration and expiration update block 120 of the content processing apparatus 10 requests the distribution server 20 for the updating of the valid period (step S302). This update request processing is executed by transmitting update request information (for example, user ID, credit card number, device ID, and update request notification) to the distribution server 20. This update request is made if (1) a update request command or part of update request information is entered by the user who desires the extension of a distribution service use period (namely, the extension of the valid period of the group ID) or (2) an update request comes from the reproduction control block 182 because distributed content data cannot be reproduced due to the expiration of the valid period of the group ID as described above. To be more specific, the registration and expiration update block 120 generates user registration request information (for example, group registration request notification, user ID, credit card number, and so on) on the basis of the information entered by the user, reads the device ID (for example, a terminal ID) from the own ID database 116, and transmits these pieces of information to the distribution server 20 via the network 5.

In step S304, the user authentication block 234 of the distribution server 20 authenticates the user owning the requesting content processing apparatus 10 (step S304). This user authentication is executed by determining whether there is a match between the user charging information included in the received group registration request information and the user charging information of the user registration database 216. If the user authentication failed, the valid period update processing ends. If the user authentication is successful, the procedure goes to step S306.

In step S306, the registration management block 252 of the distribution server 20 transmits an authentication notification to the content processing apparatus 10 (step S306). When this authentication notification is transmitted, the content processing apparatus 10 becomes capable of service select processing and update period specification processing in the distribution server 20.

Then, in step S308, the content processing apparatus 10 transmits distribution service form select information and/or desired update period information to the distribution server 20 on the basis of the information entered by the user (step S306). The user of the content processing apparatus 10 operates the input unit 106 to select, on the GUI screen of the content processing apparatus 10 for example, a desired distribution service form after the updating of the valid period, from among a plurality of distribution service forms prepared in the distribution server 20.

For example, the user registered in distribution service form β "you can listen to up to 10 pieces of music by Jhon within 1 month at a rate of 0$" may select distribution service form "you can listen to music by Jhon for 1 year without restriction" so as to listen to the music by "Jhon" longer. In this case, because a new distribution service form (having a different group ID) is selected, approximately the same processing as the registration of a new distribution service form (refer to FIG. 11) is executed with respect to the system processing. Hence, the content processing apparatus 10 transmits the distribution service form select information corresponding to the newly selected distribution service form to the distribution server 20 on the basis of the information entered by the user.

If the user desires to extend the above-mentioned distribution service form β "you can listen to up to 10 pieces of music by Jhon within 1 month at a rate of 0$" by another month, the same user selects the same distribution service form. Therefore, the user may enter "1 month" as the desired update period information to update the valid period. In this case, the content processing apparatus 10 transmits the entered desired update period information to the distribution server 20.

It should be noted that the user may select one or more distribution service forms in this step. When one or more distribution service forms are selected by the user, the content processing apparatus 10 generates the distribution service form select information corresponding to one or more selected distribution service forms and transmits the generated information to the distribution server 20.

Instead of selecting a distribution service form having a predetermined use period, the user may select a distribution service form that allows the setting of its service use period (namely, the valid period of the group ID) as desired by the user as indicated by "T6" shown in FIG. 4. In this case, the user enters the valid period of a desired distribution service form (namely, the valid period of the group ID) into the content processing apparatus 10. In response, the content processing apparatus 10 generates the desired update period information and transmits the generated information to the distribution server 20 along with the distribution service form select information of "T6".

In step S310, the registration management block 252 of the distribution server 20 sets the selected distribution service form to that user and the requesting content processing apparatus 10 on the basis of the received distribution service select information (step S310).

In step S312, the registration management block 252 of the distribution server 20 generates the group ID corresponding to the requesting user and the selected distribution service form and assigns the generated group ID to that user (step S312).

Then, in step S314, the registration management block 252 of the distribution server 20 generates the valid period update information of the group ID assigned to the user on the basis of the use period specified for each distribution service form set as above or the desired update period information received as above (step S314). It should be noted that, if a new distribution service form is selected, this valid period update information may be the same as the valid period information that is generated at the time of the above-mentioned new distribution service form registration. If the desired update period information is transmitted, the valid period update information is generated on the basis of that desired update period information.

In step S316, the registration management block 252 of the distribution server 20 executes update registration processing and charging processing (step S316). These update registration processing and charging processing are the same as the above-mentioned registration processing.

In step S318, the registration management block 252 of the distribution server 20 notifies the requesting content processing apparatus 10 of the group ID assigned to the user in step S314 and the valid period update information of the group ID generated in step S316 (step S318).

Next, in step S320, the registration and expiration update block 120 of the requesting content processing apparatus 10 securely stores the group ID and the valid period update information received from the distribution server 20 into the content processing apparatus 10. If only the valid period has been extended with the distribution service form not changed, then the valid period update information is added as related with the corresponding group ID in reproduction permission.ID list L.

Thus, the processing of updating the valid period for the user, distribution service forms, and the content processing apparatus 10 has been completed. Consequently, the registered user is able to receive and reproduce distributed content data by the use of the registered content processing apparatus 10 within the updated valid period of the group ID.

The following describes a copyright management system 100 practiced as a second embodiment of the invention. As compared with the copyright management system 100 associated with the first embodiment, the copyright management system 100 associated with the second embodiment attaches a group ID to the created content data created by a content processing apparatus 10 (a recording device, for example) having content data recording capabilities, in unit of that content processing apparatus 10. The other functional configurations are substantially the same between both the content processing apparatuses 10, so that the description thereof will be skipped.

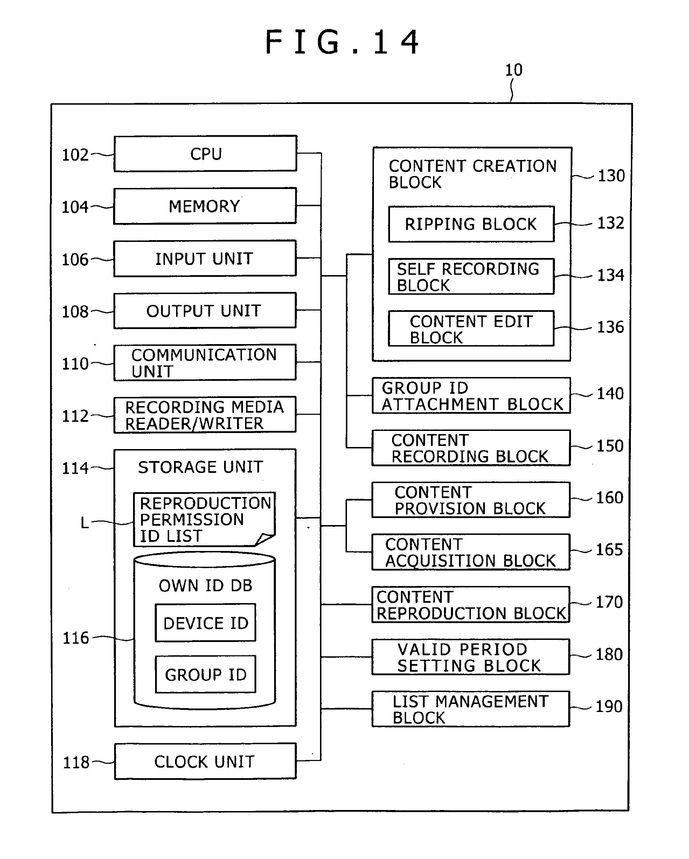

First, an exemplary configuration of the content processing apparatus 10 associated with the second embodiment will be described in detail with reference to FIG. 14. FIG. 14 is a block diagram approximately illustrating an exemplary configuration of the content processing apparatus 10 associated with the second embodiment.

As shown in FIG. 14, the content processing apparatus 10 has a CPU 102, a memory 104, an input unit 106, an output unit 108, a communication unit 110, a recording media reader/writer 112, a storage unit 114, a clock unit 118, a content creation block 130, a group ID attachment block 140, a content recording block 150, a content provision block 160, a content acquisition block 165, a content reproduction block 170, a valid period setting block 180, and a list management block 190.

The above-mentioned CPU 102, memory 104, input unit 106, output unit 108, communication unit 110, recording media reader/writer 112, a clock unit 118, content provision block 160, content acquisition block 165, and content reproduction block 170 have substantially the same functional configurations as those of the first embodiment described above, so that the description thereof will be skipped.

The storage unit 114 is a device for data storage constituted by a hard disk drive or a flash memory for example, capable of storing various kinds of data such as programs and content data. The storage unit 114 is configured as storage means associated with the second embodiment and stores reproduction permission ID list L as described above. This reproduction permission ID list L is stored as encrypted or signatured to prevent the user from falsification, for example.

With this reproduction permission ID list L, group IDs are added or deleted. The group ID associated with the present embodiment is an ID (or a recorder ID) that is uniquely assigned to the content processing apparatus 10 that has content data recording capabilities. In the present embodiment, the group ID assigned to the content processing apparatus 10 itself is stored as included in this reproduction permission ID list L. This configuration allows the content processing apparatus 10 to reproduce the content data recorded thereby, namely, the content data attached with the group ID thereof.

In addition, the storage unit 114 stores an own ID database 116 containing the device ID and group ID (or recorder ID) corresponding to the content processing apparatus 10 itself, for example. The device ID is an identifier that is uniquely assigned to each content processing apparatus 10 having at least content recording or reproducing capabilities. By this device ID, each content processing apparatus 10 can be identified uniquely. The device ID may include a terminal ID and a media ID. The terminal ID is a device ID that is uniquely assigned to a content processing apparatus 10A constituted by an information processing apparatus such as a PC. The media ID is uniquely assigned to each storage medium of each of content processing apparatuses 10B and 10C constituted by a recording device or a PD, for example. Therefore, the group ID is not assigned to a reproduction-only content processing apparatus 10. No group ID is stored in the own ID database 116 of the reproduction-only content processing apparatus 10.

These device ID and group ID (or recorder ID) are securely stored, in advance, in the own ID database 116 in an encrypted manner before shipment from factory of the content processing apparatus 10. This configuration prevents the user of the content processing apparatus 10 from falsifying the device ID and group ID.

A content creation block 130 is capable of newly creating content data. The content processing apparatus 10 having this content creation block 130 is capable of creating and recording new content data by self recording (self audio and video recording) or ripping, for example. The self recording denotes the recording of audio and video data picked up and imaged by a sound pickup device and an imaging device of the content processing apparatus 10 or the audio and video data received through a communication device. The ripping denotes the extraction of the digital content data (audio data and video data, for example) from recording media such as music CD, video DVD, and software CD-ROM for example and the recording of the extracted digital content data in a file format that can be processed by computers, for example.

The content creation block 130 has a ripping block 132, a self recording block 134, and a content edit block 136, for example.

The ripping block 132 is capable of ripping data from recording media such as music CD and video DVD, for example. To be more specific, the ripping block 132 controls the recording media reader/writer 112 on the basis of the information entered by the user to take a file such as music/video data for example out of the above-mentioned recording media, converts the extracted music/video data into a file format (MP3, for example) that can be processed by the content processing apparatus 10, and creates content data. The ripping applies to both CD and self recording. The ripping block 132 is configured by installing a ripping software program on the content processing apparatus 10, for example.

The self recording block 134 is capable of newly creating content data by self sound and video recording. The ripping block 132 has a sound pickup device such as microphone, an image device such as camera, a sound and video recording device, and a recording control unit for controlling these devices. The self recording block 134 configured as such creates audio data or video data by picking up sound around the content processing apparatus 10 or imaging an object on the basis of the information entered by the user and executes predetermined data processing on the created audio or video data, thereby newly creating content data. In addition, the self recording block 134 is capable of converting the audio/video data of a television or radio program received through the communication unit 110 for example into a recordable format to newly create content data.

The content edit block 136 is capable of editing (manipulating, combining, linking, and so on) one or more pieces of content data to create new user-unique content data. Also, the content edit block 136 is capable of executing draw processing on the basis of the information entered by the user to create new video data, executing composition processing to create new audio data, and executing document creation processing to create new electronic book data and new software consisting of program lists, for example. The content edit block 136 is configured by installing content edit/creation software on the content processing apparatus 10, for example.

The content data (created content data) created by the content creation block 130 is outputted to the group ID attachment block 140.

The group ID attachment block 140 attaches a group ID corresponding to the content processing apparatus 10 itself to the created content data created by the above-mentioned content creation block 130, for example. To be more specific, the group ID attachment block 140 reads a group ID from the self ID database in the storage unit 114 and attaches this group ID to the created content data.

This group ID is attached when the creation of content data by the content creation block 130 is completed. Attaching a group ID to content data immediately after its creation allows the sure embedding of the group ID into the content data requiring copyright management before the content data is distributed within the system. It should be noted that the group ID attachment timing is not restricted to the timing mentioned above; for example, a group ID may be attached when the created content data is reproduced for the first time, copied, or provided to another content processing apparatus 10.

The content recording block 150 controls the storage unit 114 or the recording media reader/writer 112 to record the created content data attached with a group ID by the group ID attachment block 140.

The valid period setting block 180 sets valid period information to a group ID contained in reproduction permission ID list L. The valid period information to be set by this valid period setting block 180 is a valid period consisting of start time and end time as shown in FIG. 8, for example. The valid period setting block 180 is capable of recording the valid period information set to a group ID to reproduction permission ID list L of the content processing apparatus 10 itself or reproduction permission ID list L of another content processing apparatus 10 as related with that group ID.

Setting a valid period to a group ID by the valid period setting block 180 prevents the content processing apparatus 10 that acquired created content data from reproducing the received content data attached with that group ID outside the valid period set to that group ID by the valid period setting block 180.

Also, only when the content processing apparatus 10-1 and another content processing apparatus 10-2 are locally interconnected via the local line 9 for example, the valid period setting block 180 is capable of updating (namely, extending or shortening) the valid period information of the group ID-1 of the content processing apparatus 10-1 contained in reproduction permission ID list L-2 of the content processing apparatus 10-2. This update processing may be executed by transmitting the group ID-1 of the content processing apparatus 10-1 and the valid period update information corresponding to the group ID-1 to the content processing apparatus 10-2 by the valid period setting block 180 of the content processing apparatus 10, for example.

Configured as above, the valid period setting block 180 functions as an autonomous regulating module that prevents the content data recorded in the content processing apparatus 10 (for example, a video recorder such as DVD recorder) from being diffused.

The list management block 190 updates the above-mentioned reproduction permission ID list L, namely, adds or deletes group IDs to or from this list. By adding or deleting group IDs to reproduction permission ID list L, the list management block 190 is capable of enabling or disabling the reproduction of the content data attached with a group ID in the content processing apparatus 10. Also, the list management block 190 is capable of synchronizing reproduction permission ID list L in its content processing apparatus 10 and that of another content processing apparatus 10.

Thus, each component of the content processing apparatus 10 has been described. The above-mentioned each component may be configured as hardware having the corresponding function or as software having the corresponding function installed on the content processing apparatus 10.

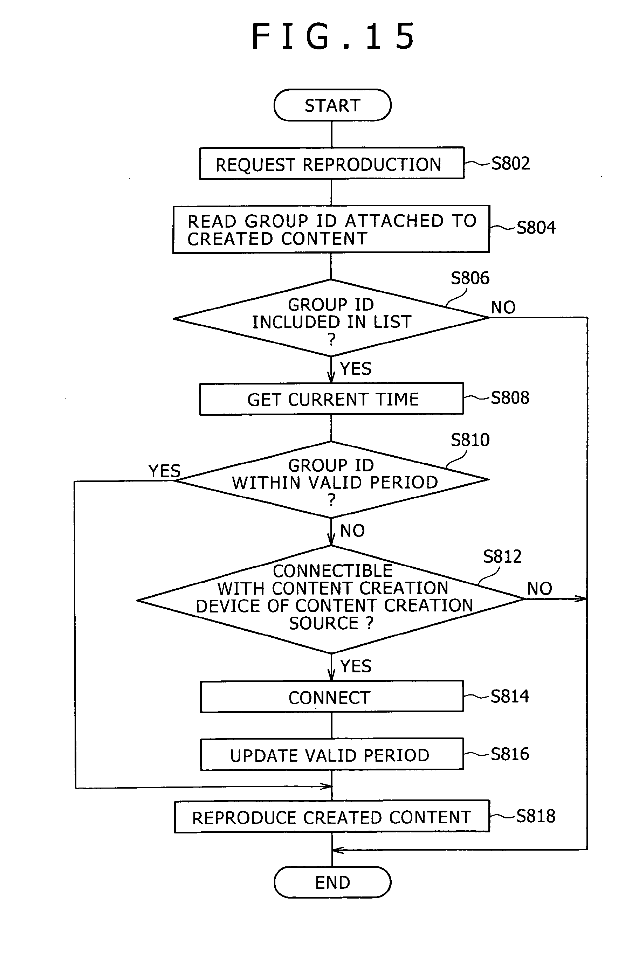

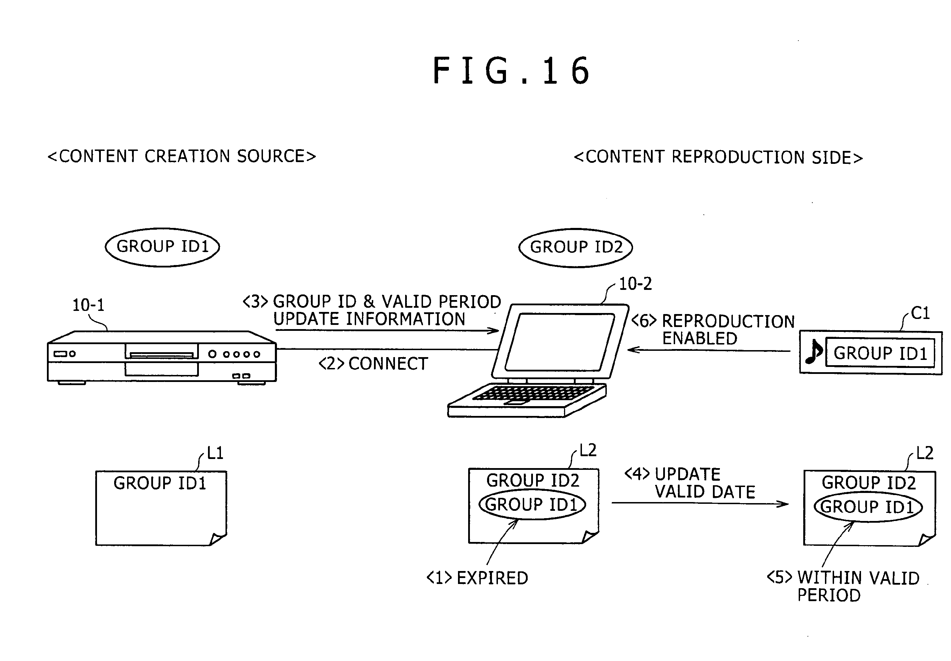

The following describes created content reproduction control processing in the content processing apparatus 10 of the copyright management system 100 according to the second embodiment with reference to FIGS. 15 and 16. FIG. 15 is a flowchart indicative of the created content reproduction control processing according to the second embodiment. FIG. 16 is a schematic diagram illustrating a concept of the created content reproduction control processing according to the second embodiment.

As shown in FIG. 15, in step S802, a request for reproduction is made by the user for example (step S802). The user makes this reproduction request by selecting desired created content data through the input unit 106 of the content processing apparatus 10 and instructs the content processing apparatus 10 to reproduce the selected created content data.

In step S804, the group ID attached to the created content data is read (step S804). The content reproduction block 170 of the content processing apparatus 10-1 reads the created content data requested for reproduction from the storage unit 114 or the recording medium 7 for example and extracts the group ID from the created content data to interpret the extracted group ID.

In step S806, it is determined whether the extracted group ID is contained in reproduction permission ID list L of the content processing apparatus 10 (step S806). To be more specific, the reproduction control block 172 of the content reproduction block 170 determines whether the group ID read from the above-mentioned created content data is contained in reproduction permission ID list L read from the storage unit 114. If the group ID read from the created content data is found contained in reproduction permission ID list L, then the procedure goes to step S808. On the other hand, if the group ID is found not contained in reproduction permission ID list L, then the reproduction control block 172 does not permit the reproduction of that created content data, thereby ending all the reproduction control processing without reproducing that created content data.

In step S808, the current time information is acquired (step S808). The reproduction control block 172 gets the current time information generated by a timer unit 118.

In step S810, it is determined whether the current time acquired above is in excess of the valid period of the group ID read from that created content data (step S810). If the current time is found not in excess of the valid period of the group ID read from the above-mentioned created content data, then the reproduction control block 172 permits the reproduction of that created content data and the procedure goes to step S818, in which that created content data is reproduced. On the other hand, if the current time is found in excess of the valid period of the group ID read from the created content data, it indicates that the valid period of the group ID has expired (refer to FIG. 16 <1>). Therefore, the reproduction control block 172 disallows the reproduction of that created content data and the procedure goes to step S812.

The following description will be made with reference to FIG. 16. It is assumed that the unit attempting the reproduction of created content data up to this step be a content processing apparatus 10-2 shown in FIG. 16 and, in reproduction permission ID list L of the content processing apparatus 10-2, the group ID1 read from created content data C1 be already expired. This group ID1 is assigned to the content processing apparatus 10-1 that is a recording device (a DVD recorder, for example) on which content data C1 has been created.

In step S812, it is determined whether the content processing apparatus 10-2 is connectable to the content processing apparatus 10-1 that created the content data (step S812). The content processing apparatus 10-1 is attached with the group ID1 read from the above-mentioned created content data. To be more specific, it is determined whether the content processing apparatus 10-2 attempting the reproduction of created content data C1 is physically connectable, via the local line 9 for example, to the content processing apparatus 10-1 that created content data C1. If the content processing apparatus 10-1 and the content processing apparatus 10-2 are found connectable to each other, then the procedure goes to step S814, in which both the content processing apparatuses are locally physically interconnected with a USB cable for example (S814; refer to FIG. 16 <2>). On the other hand, if both the content processing apparatuses are found not connectable, it indicates that the valid period information cannot be updated, so that the reproduction control processing is all ended without reproducing the created content data.

In step S816, the valid period setting block 180 of the content processing apparatus 10-1 that created the content data transmits group ID1 and the valid period update information thereof to the content processing apparatus 10-2 via the local line 9 (refer to FIG. 16 <3>). Consequently, the content processing apparatus 10-2 updates the valid period information of group ID1 (group ID1 of the content processing apparatus 10 that created the content data) contained in its reproduction permission ID list L2, thereby extending the valid period by a predetermined period of time (for example, 1 day, 10 days, 1 month, or 1 year) (refer to FIG. 16 <4>). Thus, the group ID1 in the reproduction permission ID list L2 is put in a valid period (refer to FIG. 16 <5>), so that the content processing apparatus 10-1 becomes capable of reproducing the above-mentioned created content data C1 (refer to FIG. 16 <5>).

As described above, in order to extend the valid period of group ID, the content processing apparatuses 10-1 and 10-2 must be interconnected in a wired manner. If the contented recorded by the content processing apparatus 10-1 of a certain user can be reproduced by another content processing apparatus 10-2 that acquired the group ID1 of the content processing apparatus 10-1, within the valid period of that group ID1. However, once the group ID1 has expired, the time limit of the group ID of the content processing apparatus 10-2 cannot be updated unless both the content processing apparatuses 10-1 and 10-2 interconnected in proximity, thereby disabling the reproduction of the above-mentioned content data. Such a system is suitably applicable as autonomous regulating means in properly executing copyright protection for the created content data by a sound recording device and a video recording device that are comparatively large in size and therefore inconvenient in transportation.

Thus, the copyright management systems 100 associated with the embodiments of the invention and the components thereof, copyright management method, and so on have been described. Each of the above-mentioned copyright management systems 100 allows the reproduction of only the content data attached with the group ID within a valid period contained in reproduction permission ID list L on the basis of the group ID attached to content data, the group ID permitted for reproduction and reproduction permission ID list L, and the valid period of the group ID.

As described, the reproduction time limits of a plurality of pieces of content data attached with the same group ID can be set and updated (or extended or shortened) in a batch manner by setting the valid period of each group ID. This configuration allows the collective management of a plurality of pieces of content grouped by a predetermined condition, as a plurality of pieces of content owned by the same user, for example. To be more specific, the novel configuration makes it unnecessary for the distribution server 20 to execute complicated processing of assigning a reproduction time limit (or a license) to each piece of distributed content one by one. Also, in shortening or extending the reproduction time limit of content data, the novel configuration may update only the valid period information of each group ID contained in reproduction permission ID list L, for example.

Consequently, unlike the related-art copyright management system 100 in which a reproduction time limit is set to each piece of content data one by one, the present invention enhances the efficiencies of the setting and updating processing operations within the system. In addition, the present invention allows the provision of a content distribution service in which content may be reproduced (or listened to ) without restriction at a month rate for example and a content distribution service in which the reproduction time limit of content may be extended if payment is made within a preview service period, for example. Further, the present invention makes it unnecessary for the user to be aware of and manage the reproduction limit times of a plurality pieces of content of his own in an individual manner, thereby enhancing the efficiency of content handling. Still further, the present invention allows the user to handle content in groups of his preference and style, such as genre, artist, and age, for example.

While preferred embodiments of the present invention has been described using specific terms, such description is for illustrative purpose only, and it is to be understood that changes and variations may be made without departing from the spirit or scope of the following claims.

The present invention is applicable to any copyright management system that sets content reproduction time limits.

## Claims

1. A content reproduction apparatus (10) comprising:
a storage unit (114) for storing a reproduction permission ID list with which a group ID is added and deleted and valid period information of said group ID; and
a reproduction control block (172) for controlling reproduction of content data attached with said group ID;
wherein said reproduction control block (172) reads said group ID from said content data and, if said group ID is contained in said reproduction permission ID list and a current time is not in excess of a valid period of said group ID, permits the reproduction of said content data, but, if said group ID is not contained in said reproduction permission ID list or a current time is in excess of a valid period of said group ID, permits the reproduction of said content data, restricts the reproduction of said content data.

2. The content reproduction apparatus (10) according to claim 1, wherein said content data is distributed content data that is distributed from a distribution server (20) connected to said content reproduction apparatus. (10)

3. The content reproduction apparatus (10) according to claim 2, wherein said group ID is uniquely assigned to each user registered in said distribution server.

4. The content reproduction apparatus (10) according to claim 2, wherein said group ID is uniquely assigned to each distribution service form selected by said user registered in said distribution server (20).

5. The content reproduction apparatus (10) according to claim 2, 3 or 4, wherein said group ID contained in said reproduction permission ID list is transmitted from said distribution server (20).

6. The content reproduction apparatus (10) according to one of the claims 2 to 5, wherein said valid period information of said group ID stored in said storage unit (114) is transmitted from said distribution server (20).

7. The content reproduction apparatus (10) according to one of the claims 2 to 6, further comprising:
a period updating block (120) for updating said valid period information of said group ID stored in said storage unit (114) on the basis of valid period update information transmitted from said distribution server (20) .

8. The content reproduction apparatus (10) according to claim 7, wherein said period updating block (120) requests one of said distribution server (20) and another content reproduction apparatus for updating said valid period information of said group ID read from said content data if said current time is in excess of said valid period of said group ID read from said content data and,
in response to said request for updating, updates said valid period information of said group ID read from said content data on the basis of valid period update information received from one of said distribution server (20) and another content reproduction apparatus.

9. The content reproduction apparatus (10) according to one of the claims 1 to 8, wherein said content data is created content data created by a content recording apparatus and said group ID is uniquely assigned to each content recording apparatus.

10. The content reproduction apparatus (10) according to claim 9, wherein, if said content recording apparatus is connected to said content reproduction apparatus, said group ID corresponding to said connected content recording apparatus may be added to said reproduction permission ID list.

11. The content reproduction apparatus (10) according to claim 9, wherein, if said content recording apparatus is connected to said content reproduction apparatus, said valid period information of said group ID corresponding to said content recording apparatus is updatable.

12. The content reproduction apparatus (10) according to one of the claims 1 to 11, wherein said group ID and said valid period information thereof are written to said reproduction permission ID list in a related manner.

13. The content reproduction apparatus (10) according to one of the claims 1 to 12, further comprising:
a clock unit for generating said current time information.

14. A content reproduction control method for controlling reproduction of content data in a content reproduction apparatus on the basis of a reproduction permission ID list with which a group ID is added and deleted and valid period information of said group ID contained in said reproduction permission ID list, said program making a computer execute the steps of:
reading a group ID attached to content data requested for reproduction thereof;
determining whether said read group ID is contained in said reproduction permission ID list;
determining, if said read group ID is found contained in said reproduction permission ID list, whether a current time is in excess of a valid period of said read group ID;
permitting reproduction of said content data requested for reproduction thereof if said current time is not in excess of said valid period of said read group ID; and
restricting reproduction of said content data requested for reproduction thereof if said current time is in excess of said valid period of said read group ID.

15. The content reproduction control method according to claim 14, wherein said content data is distributed content data that is distributed from a distribution server connected to said content reproduction apparatus.

16. The content reproduction control method according to claim 15, wherein said group ID is uniquely assigned to each user registered in said distribution server.

17. The content reproduction control method according to claim 15, wherein said group ID is uniquely assigned to each distribution service form selected by said user registered in said distribution server.

18. The content reproduction control method according to claim 15, further comprising the step of:
updating said valid period information of said group ID stored in said storage unit on the basis of valid period update information transmitted from said distribution server.

19. The content reproduction control method according to claim 15, further comprising the steps of:
requesting one of said distribution server and another content reproduction apparatus for updating said valid period information of said group ID read from said content data if said current time is in excess of said valid period of said group ID read from said content data; and,
updating, in response to said request for updating, said valid period information of said group ID read from said content data on the basis of valid period update information received from one of said distribution server and another content reproduction apparatus.

20. The content reproduction control method according to claim 14, wherein said content data is created content data created by a content recording apparatus and said group ID is uniquely assigned to each content recording apparatus.

21. The content reproduction control method according to claim 20, wherein, if said content recording apparatus is connected to said content reproduction apparatus, said valid period information of said group ID corresponding to said content recording apparatus is updatable.
